(19) Europäisches Patentamt
European Patent Office
Office européen des brevets

(11) **EP 3 748 055 B1**

(12) **EUROPEAN PATENT SPECIFICATION**

(45) Date of publication and mention
of the grant of the patent:
**23.10.2024   Bulletin 2024/43**

(21) Application number: **19747455.4**

(22) Date of filing: **23.01.2019**

(51) International Patent Classification (IPC):
**D02J 1/18** *(2006.01)*          **B65H 51/005** *(2006.01)*
**C08J 5/04** *(2006.01)*           **B29B 15/12** *(2006.01)*
**D01D 5/42** *(2006.01)*           **D01D 11/02** *(2006.01)*
**D04H 13/02** *(2006.01)*          **D04H 1/4242** *(2012.01)*
**D04H 1/58** *(2012.01)*           **D04H 3/002** *(2012.01)*
**D04H 3/04** *(2012.01)*

(52) Cooperative Patent Classification (CPC):
**C08J 5/042; B29B 15/122; D01D 5/423;
D01D 11/02; D02J 1/18; D04H 1/4242; D04H 1/58;
D04H 3/002; D04H 3/04;** C08J 2300/22;
C08J 2300/24

(86) International application number:
**PCT/JP2019/002051**

(87) International publication number:
**WO 2019/151076 (08.08.2019 Gazette 2019/32)**

(54) **PARTIALLY SEPARATED FIBER BUNDLE, INTERMEDIATE BASE MATERIAL, MOLDING, AND METHOD FOR PRODUCING SAME**

TEILWEISE SEPARIERTES FASERBÜNDEL, ZWISCHENBASISMATERIAL, FORMTEIL UND VERFAHREN ZU DESSEN HERSTELLUNG

FAISCEAU DE FIBRES PARTIELLEMENT SÉPARÉ, MATÉRIAU DE BASE INTERMÉDIAIRE, MOULAGE ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **01.02.2018   JP 2018016116**

(43) Date of publication of application:
**09.12.2020   Bulletin 2020/50**

(73) Proprietor: **Toray Industries, Inc.**
**Tokyo 103-8666 (JP)**

(72) Inventors:
• **KURODA, Tetsuya**
**Iyo-gun, Ehime 791-3193 (JP)**
• **KONDO, Takashi**
**Iyo-gun, Ehime 791-3193 (JP)**
• **SHIMOYAMA, Akira**
**Nagoya-shi, Aichi 4558502 (JP)**

(74) Representative: **Hoefer & Partner Patentanwälte mbB**
**Pilgersheimer Straße 20**
**81543 München (DE)**

(56) References cited:
EP-A1- 3 239 372          WO-A1-2010/053170
WO-A1-2016/104154     WO-A1-2017/006989
WO-A1-2017/221657     JP-A- 2001 151 418

# EP 3 748 055 B1

**Description**

TECHNICAL FIELD

The present invention relates to a method for producing a partial split-fiber fiber bundle, and a partial split-fiber fiber bundle obtained by the method or an apparatus for producing the same. The present invention specifically relates to a method and an apparatus for producing the partial split-fiber fiber bundle allowing continuous separation of an inexpensive large tow having a large number of filaments without causing yarn breakage, and also relates to a partial split-fiber fiber bundle, an intermediate base material, and a molded article obtained by the method and the apparatus for producing.

BACKGROUND ART

A technique is known in which a molded article having a desired shape by heating and pressure molding using a molding material including a bundle-shaped aggregate (hereinafter, also referred to as a fiber bundle) of discontinuous reinforcing fibers (for example, carbon fibers) and a matrix resin is produced. As such a molding material, a molding material including a fiber bundle having a large number of filaments has excellent fluidity at the time of molding, but the mechanical properties of a molded article tend to be inferior. Meanwhile, a fiber bundle adjusted to have an arbitrary number of filaments is used as a fiber bundle in a molding material in order to achieve both fluidity at the time of molding and mechanical properties of a molded article.

As methods for adjusting the number of filaments of a fiber bundle, for example, Patent Documents 1 and 2 disclose methods for performing fiber separation processing using a multiple fiber bundle winding body obtained by winding a plurality of fiber bundles in advance. However, in these methods, a range of the adjustment is limited because of a restriction of the number of filaments of a fiber bundle for pre-processing, and it has been difficult to adjust the number of filaments to the desired number of filaments.

Further, for example, Patent Documents 3 to 5 disclose methods of longitudinally slitting a fiber bundle into a desired number of filaments using a disc-shaped rotary blade. In these methods, although the number of filaments can be adjusted by changing a pitch of the rotary blade, it tends to be difficult to handle the yarns, for example, to wind up the yarns longitudinally slit on a bobbin and unwind the fiber bundle from the bobbin on which the yarns have been wound since the fiber bundle longitudinally slit along the entire length in a longitudinal direction does not have convergence. Further, when the fiber bundle longitudinally slit is conveyed, the fiber bundle with split ends generated by being longitudinal slit may wind around a guide roll, a feed roll, or the like, and may not be easily conveyed.

Further, Patent Document 6 discloses a method for cutting a fiber into a predetermined length at the same time with longitudinally slitting, by a separation cutter having a lateral blade perpendicular to a fiber direction in addition to a longitudinal blade parallel with the fiber direction having a longitudinal slit function. This method eliminates the need for winding the fiber bundle that has been longitudinally slit on a bobbin to convey the fiber bundle, and makes the fiber bundle easier to handle. Unfortunately, since the separation cutter includes a longitudinal blade and a lateral blade, when one of the blades reaches the end of cutting life first, the entire blade has to be replaced.

In recent years, the increasing demand for industrial carbon fibers has made it essential to increase the length in terms of productivity. However, a large tow often has a larger number of filaments and is shorter than a regular tow. Fiber bundles are therefore joined to obtain a long product. A connected part between the fiber bundles is called a splice part. In the splice part, distal ends of the fiber bundle are entangled by a pressurized fluid or joined by a mechanical knotter, and the number of filaments of the fiber bundle is approximately doubled. The fiber bundle having the splice part is effective in improving operability and productivity by increasing the length. However, the splice part has a high fiber density, and thus there has been a risk of breaking the fiber bundle when a blade such as a rotary blade is thrust into the splice part and the fiber bundle is subjected to the fiber separation processing. The fiber bundle having the splice part is therefore difficult to be subjected to the fiber separation processing.

Patent Document 7 discloses a method for producing a spread fiber sheet that can be produced stably at low cost by using a pre-spread fiber bundle as a rotating fiber splitting means with protrusions and a method for providing an apparatus producing such a spread fiber sheet. However, when there is a splice part in the fiber bundle, the rotary device with protrusions continuously rotates, and the protrusions may break the splice part. The broken fiber bundle may be wound around a separation roller or a feed roll to make it impossible to convey the fiber bundle.

Further, Patent Document 8 discloses a method for producing in which a blade-shaped fiber splitting means is thrust into a fiber bundle and cuts into the fiber bundle to separate fibers, and a blade is swung in a width direction to form a flow channel (wide separation part) that facilitates resin impregnation, the subsequent resin impregnation is thus improved, and a production step can be simplified. However, when the fiber bundle includes a splice part between a plurality of yarn bundles configuring the fiber bundle, the blade continuously separates the fibers in the fiber bundle, and the splice part may be broken by the blade. The fiber bundle may be clogged to make it impossible to convey the fiber bundle. Further, the blade, which is very thin, may be damaged when the splice part is broken and the fiber bundle is clogged.

Further, Patent Document 9 discloses a producing method and a method for providing a producing apparatus in which an improved quality of a fiber bundle and a long-time stable operation can be achieved by intermittently rotating a separation jig having a concave-convex shape and by separating fibers.

Further, Patent Document 10 discloses a producing method and a method for providing a producing apparatus in which stable continuous operation with insufficient separation, winding around a roll, and slanting and meandering of a fiber bundle can be achieved by intermittently separating the continuous fiber bundle with a rotary separation jig.

Further, Patent Document 11 discloses a method for producing and a method for providing an apparatus producing a partial split-fiber fiber bundle that can be stably separated, in which a rotating fiber splitting means that thrusts protruding parts of a rotary blade into a fiber bundle is provided, an imaging device that detects any twist of the fiber bundle is further provided, and fibers can be stably separated by controlling the fiber splitting means such that pressing force to the fiber bundle is reduced from immediately before the twist of the fiber bundle contacts a protruding part until the twist passes the protruding part.

Further, Patent Document 12 discloses a producing method and a method for providing a producing apparatus in which a fiber splitting means that separates fibers with a fixed groove roll is provided, and a large cost reduction is achieved as compared with regular tow independent production by separating the a large tow with the groove roll in the same manner as a regular tow. Patent Document 12 discloses that it is necessary to pass a splice part or a thread knot upon starting a new creel, and in that case, a groove roll is manually moved to a flat roll side and returned to the groove roll side after the splice part or the thread knot passes the roll.

Further, Patent Document 13 discloses a method in which a rotating fiber splitting means that thrusts a protruding part of a rotary blade into a fiber bundle is provided, an imaging device that detects presence or absence of a twist of the fiber bundle is further provided, and in a split-fiber processed part and a split-fiber unprocessed part of a partial split-fiber fiber bundle, the separation processing of a twisted part is avoided to form the split-fiber unprocessed part. However, none of the above documents discloses a method for efficiently and stably producing a partial split-fiber fiber bundle in a fiber bundle having a splice part. Further, a method of cutting a partial split-fiber fiber bundle and evaluating ease of splitting the partial split-fiber fiber bundle after cutting in a sheet molding compound (hereinafter abbreviated as SMC) step using the cut partial split-fiber fiber bundle. Further relevant information can be found in documents EP 3 239 372 and WO 2017/221657.

PRIOR ART DOCUMENTS

PATENT DOCUMENTS

Patent Document 1: Japanese Patent Laid-open Publication No. 2002-255448
Patent Document 2: Japanese Patent Laid-open Publication No. 2004-100132
Patent Document 3: Japanese Patent Laid-open Publication No. 2013-49208
Patent Document 4: Japanese Patent Laid-open Publication No. 2014-30913
Patent Document 5: Japanese Patent No. 5512908
Patent Document 6: International Publication No. 2012/105080
Patent Document 7: Japanese Patent Laid-open Publication No. 2011-241494
Patent Document 8: European Patent No. 2687356
Patent Document 9: International Publication No. 2016/136812
Patent Document 10: International Publication No. 2017/006989
Patent Document 11: International Publication No. 2016/104154
Patent Document 12: US Patent No. 6,385,828
Patent Document 13: International Publication No. 2017/221657

SUMMARY OF THE INVENTION

PROBLEMS TO BE SOLVED BY THE INVENTION

If there is a splice part in the fiber bundle in a continuous production of partial split-fiber fiber bundle, fluff debris may accumulate when the splice part contacts the fiber splitting means in a separation step, and the fiber bundle may be severed. In that case, continuous production is not possible. Further, the partial split-fiber fiber bundle that has been separated has a cut therein, and is not completely split. Consequently, there is no method for evaluating the ease of splitting in relation to a dispersion state of the cut partial split-fiber fiber bundle, which is an important quality item in a sheet molding compound (SMC) step as a subsequent step.

It is therefore an object of the present invention to provide a method for producing a partial split-fiber fiber bundle capable of stably separating a fiber bundle continuously for a long time even when a splice part is present in the partial split-fiber fiber bundle, and to provide a method for producing an intermediate base material and a molded article using the partial split-fiber fiber bundle. Another object of the present invention is to provide a method for evaluating a dispersion state of the cut partial split-fiber fiber bundle by the "number of splitting" related to ease of splitting.

SOLUTIONS TO THE PROBLEMS

In order to solve the above problems, the inventor, as a result of diligent study, found a method for producing a partial split-fiber fiber bundle that detects a splice part of the partial split-fiber fiber bundle, and avoids the splice part from being thrust into a fiber splitting means. That is, the method for producing a partial split-fiber fiber bundle of the present invention has the following configuration according to claim 1.

A method for producing a partial split-fiber fiber bundle, including

allowing a fiber bundle having a splice part formed by joining fiber bundles to travel along a longitudinal direction, meanwhile, repeatedly thrusting and extracting a protruding part of a fiber splitting means into and from the fiber bundle; and thus

separating a part of the fiber bundle in the longitudinal direction of the fiber bundle,

wherein the protruding part of the fiber splitting means is extracted from the fiber bundle before the splice part based on position information of the splice part (180) obtained by detecting the splice part , and when the splice part passes through the split-fiber processed part, a condition B is satisfied, wherein the condition B is that a moving speed of the protruding part of the fiber splitting means is substantially identical to a traveling speed of the fiber bundle.

In other words, the method is a method for producing a partial split-fiber fiber bundle, in which the protruding part of the fiber splitting means is extracted from the fiber bundle before the splice part based on the position information of the splice part obtained by detecting the splice part, the splice part passes through, and then timing at which the protruding part of the fiber splitting means is thrust into the fiber bundle again is changed so as to be different from timing at which a non-splice part is thrust into the fiber bundle.

Further, provided is the method for producing in which when the protruding part of the fiber splitting means passes through the splice part, the protruding part moves at a speed substantially identical to the traveling speed of the fiber bundle, and thus the timing at which the fiber splitting means is thrust into the fiber bundle again is changed. Further, provided is the method for producing a partial split-fiber fiber bundle, in which when the splice part passes through the protruding part of the fiber splitting means, the fiber splitting means temporarily stops thrusting into the fiber bundle, and thus timing at which the protruding part of the fiber splitting means is thrust into the fiber bundle is changed.

Further, provided is the method for producing a partial split-fiber fiber bundle, in which an imaging device that detects the splice part is provided upstream in the longitudinal direction of the fiber bundle from the fiber splitting means thrust into the fiber bundle, and the splice part is detected based on a rate of change in a width of the fiber bundle. Further, provided is the method for producing a partial split-fiber fiber bundle, in which the fiber splitting means includes a rotation axis orthogonal to the longitudinal direction of the fiber bundle, and a plurality of the protruding parts are provided on a part of a outer surface of the rotation axis.

Further, as a method for evaluating ease of splitting the cut partial split-fiber fiber bundle in an SMC step using the cut partial split-fiber fiber bundle, the inventors have found an evaluation method based on the number of splitting of the partial split-fiber fiber bundle. That is, a partial split-fiber fiber bundle obtained by the method for producing a partial split-fiber fiber bundle including carbon fibers is cut into a width of 15 mm in a direction perpendicular to the longitudinal direction of the partial split-fiber fiber bundle, an impact is given to the cut partial split-fiber fiber bundle, and then the number of splitting of the partial split-fiber fiber bundle is confirmed. Provided is the partial split-fiber fiber bundle in which when an impact is given to the cut partial split-fiber fiber bundle under a condition that an acceleration of $100 \text{ m/s}^2$ is applied for 60 msec, the number of splitting Y is expressed by Formulas 1 and 2.

$$\text{Non-splice part: } (X/11.1 \times 10^3) \leqq Y \leqq (X/1.5 \times 10^3)$$

[Formula 1]

$$\text{Splice part: } (X/25.0 \times 10^3) \leqq Y \leqq (X/2.5 \times 10^3)$$

[Formula 2]

Here, X is a total number of filaments of the partial split-fiber fiber bundle. The number Y of splitting is the number of pieces obtained by splitting the partial split-fiber fiber bundle, and is a positive integer. The number Y of splitting is counted as one fiber bundle in the form of a fiber bundle and a weight of each fiber bundle is 0.0007 g or more.

The method for producing an intermediate base material of the present invention is a method for producing an intermediate base material, in which the partial split-fiber fiber bundle obtained by the above method for producing a partial split-fiber fiber bundle is cut and then impregnated with a resin.

Furthermore, the method for producing a molded article of the present invention is a method for producing a molded article in which the intermediate base material obtained by the above method for producing an intermediate base material is pressed.

EFFECTS OF THE INVENTION

The present invention can provide a method and an apparatus for producing a partial split-fiber fiber bundle that can stably separate a fiber bundle continuously for a long time even when a splice part is present in the fiber bundle. Furthermore, the splice part can be prevented from contacting the protruding part of the fiber splitting means and breaking. Thus, a large tow having the splice part can be continuously subjected to the fiber separation processing. This can reduce material costs and production costs of the molded article.

In addition, ease of splitting the actual partial split-fiber fiber bundle is confirmed by a method for evaluating the number of splitting of a cut partial split-fiber fiber bundle. Thus, a partial split-fiber fiber bundle showing a good distribution state for SMC processing in a subsequent step can be confirmed in advance, and can effectively prevent abnormal products from being released.

BRIEF DESCRIPTION OF THE DRAWINGS

Fig. 1(a) is a schematic plan view, Fig. 1(b) is a schematic side view, and Fig. 1(c) is a schematic side view each showing an example of a partial split-fiber fiber bundle obtained by subjecting a fiber bundle having a splice part to fiber separation processing.

Figs. 2(a) to 2(c) are schematic side views each showing an example of a moving cycle in which a fiber splitting means is thrust into the fiber bundle having the splice part.

Fig. 3(a) is a schematic plan view and Fig. 3(b) is a schematic side view each showing timing at which the fiber splitting means is thrust into the fiber bundle having the splice part again after the fiber splitting means is extracted from the fiber bundle.

Figs. 4(a) to 4(c) are schematic side views each showing an example of the moving cycle in which an imaging apparatus that detects the splice part is provided, and the fiber splitting means is thrust into the traveling fiber bundle including the splice part.

Fig. 5 is a schematic plan view showing an example of the partial split-fiber fiber bundle obtained by subjecting the fiber bundle to the fiber separation processing.

Fig. 6(a) is a schematic plan view and Fig. 6(b) is a schematic side view each showing an example in which the fiber splitting means is thrust into the traveling fiber bundle.

Fig. 7 is a partially enlarged view showing an example of a contact part of a protruding part forming a part of the fiber splitting means.

Figs. 8(a) and 8(b) are schematic cross-sectional views each showing an example of a corner part of the contact part in the protruding part.

Figs. 9(a) to 9(c) are explanatory views each showing an example of a moving cycle in which a rotating fiber splitting means is thrust in.

Fig. 10 is a schematic view showing an example of an SMC step as a process of producing an intermediate base material.

Fig. 11 is a schematic view showing an example of the SMC step as a process of producing the intermediate base material.

Figs. 12(a) and 12(b) are schematic views each showing an example of a method for evaluating the number of splitting of a cut partial split-fiber fiber bundle.

EMBODIMENTS OF THE INVENTION

Hereinafter, the present invention will be described with reference to the drawings. The present invention is not limited to the aspects of the drawings.

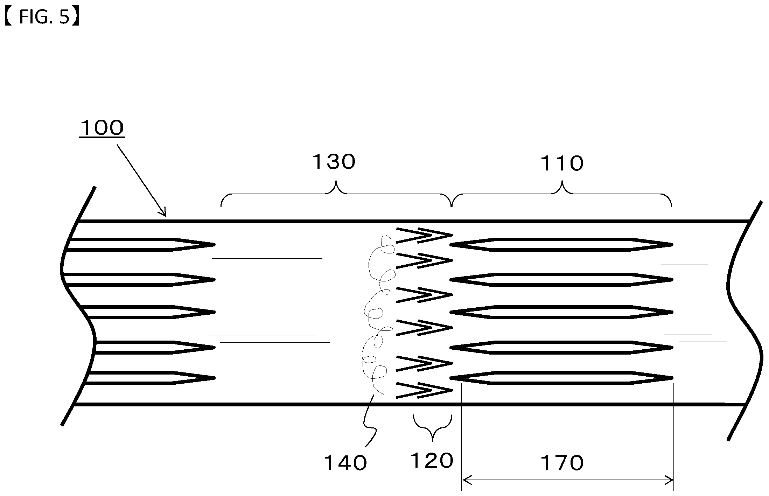

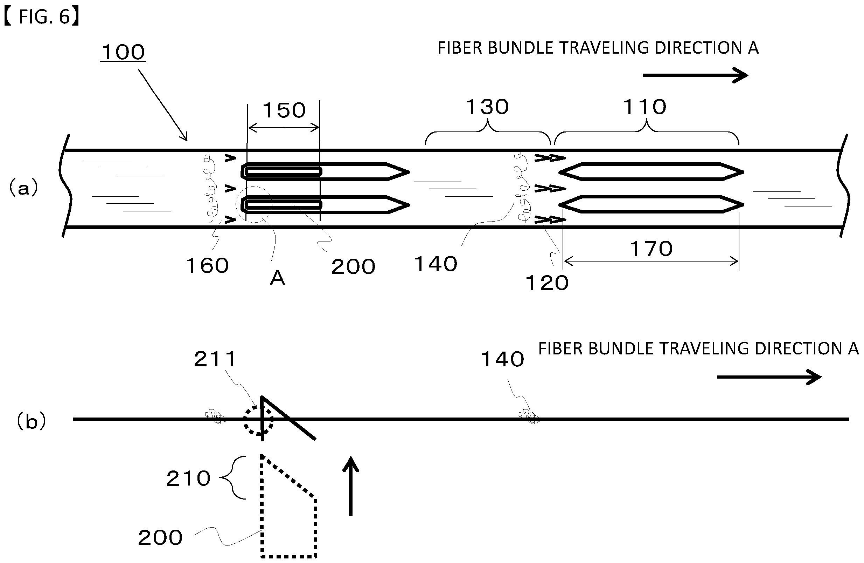

Figs. 5 and 6 exemplify schematic views of a step of subjecting the fiber bundle to fiber separation processing and the partial split-fiber fiber bundle. Fig. 6(a) is a schematic plan view and Fig. 6(b) is a schematic side view showing an example in which a fiber splitting means is thrust into a traveling fiber bundle. The fiber bundle traveling direction A (arrow) in the drawings is a longitudinal direction of a fiber bundle 100. The fiber bundle 100 is continuously supplied from a fiber bundle supply apparatus (not shown), widened in the width direction, and then travels for the step of fiber separation processing.

A fiber splitting means 200 is provided with a protruding part 210 having a protruding shape that is easily thrust into the fiber bundle 100, is thrust into the traveling fiber bundle 100, and performs the fiber separation processing in a longitudinal direction of the fiber bundle 100. An area where the fiber bundle can be separated is an area where the protruding part 210 of a fiber splitting means 220 is in contact with the fiber bundle. This area is referred to as a split-fiber processed part 150. Here, the fiber splitting means 200 is preferably thrust in a vertical direction of the fiber bundle with respect to the traveling direction of the fiber bundle 100. The vertical direction of the fiber bundle with respect to the traveling direction referred herein is an upper surface and a lower surface of a horizontal direction (equivalent to, for example, a side surface of the fiber bundle 100 shown in Fig. 6) when a cross-section of the fiber bundle is a flat shape such as a horizontally long ellipse or a horizontally long rectangle. Further, the number of protruding parts 210 provided herein may be one or more per one fiber splitting means 200. A plurality of protruding parts 210 per one fiber splitting means 200 decreases frequency of wear of the protruding parts 210, and can also decrease frequency of replacement. Further, a plurality of fiber splitting means 200 may be used at the same time, depending on the number of fiber bundles to be separated. The plurality of protruding parts 210 can be disposed in an arbitrary manner such as by arranging the plurality of fiber splitting means 200 in parallel, alternately, or with phases shifted.

When the fiber bundle 100 including a plurality of filaments is divided into a smaller number of fiber bundles by the fiber splitting means 200, the plurality of filaments is not substantially aligned but entangled in most part of the fiber bundle 100. Thus, an entangled part 160 where the filaments are entangled may be formed near a contact part 211 during the fiber separation processing.

After the fiber separation processing is performed by the split-fiber processed part 150, the fiber splitting means 200 is extracted from the fiber bundle 100. By this extraction, a split-fiber processed part 110 subjected to the fiber separation processing is generated, and at the same time, an entanglement accumulation part 120 accumulated by the entangled part 160 is generated. Further, the fluff generated from the fiber bundle during the fiber separation processing is generated as a fluff pool 140 near the entanglement accumulation part 120 during the fiber separation processing.

After that, the fiber splitting means 200 is thrust into the fiber bundle 100 again, and thus a split-fiber unprocessed part 130 is generated. The above-described operation of the fiber separation processing is repeated, and the fiber bundle 100 becomes the partial split-fiber fiber bundle exemplified in Fig. 5. Then, the partial split-fiber fiber bundle is wound into a shape of a roll or the like to be supplied to the next step.

The fiber splitting means 200 is not particularly limited as long as the object of the present invention can be achieved, and preferably has a sharp shape such as a metal needle or a thin plate. A plurality of fiber splitting means 200 is preferably provided in the width direction of the fiber bundle 100 to be subjected to the fiber separation processing. The number of fiber splitting means 200 is any number selected in accordance with the number F of filaments configuring the fiber bundle 100 to be subjected to the fiber separation processing. When reinforcing fibers are used for the fiber bundle, the number of split-fiber processed parts may preferably be the number of split-fiber processed part of equal to or more than ((F/10,000) - 1) or less than ((F/500) - 1) in the width direction of one fiber bundle 100. Here, F is the total number of filaments configuring the fiber bundle to be subjected to the fiber separation processing. When the number is less than (F/10,000 - 1), it is difficult to improve mechanical properties when the fiber bundle is made into a fiber reinforced composite material in the subsequent step. When the number is equal to or more than (F/500 - 1), there is a risk of yarn breakage or fluff during the fiber separation processing.

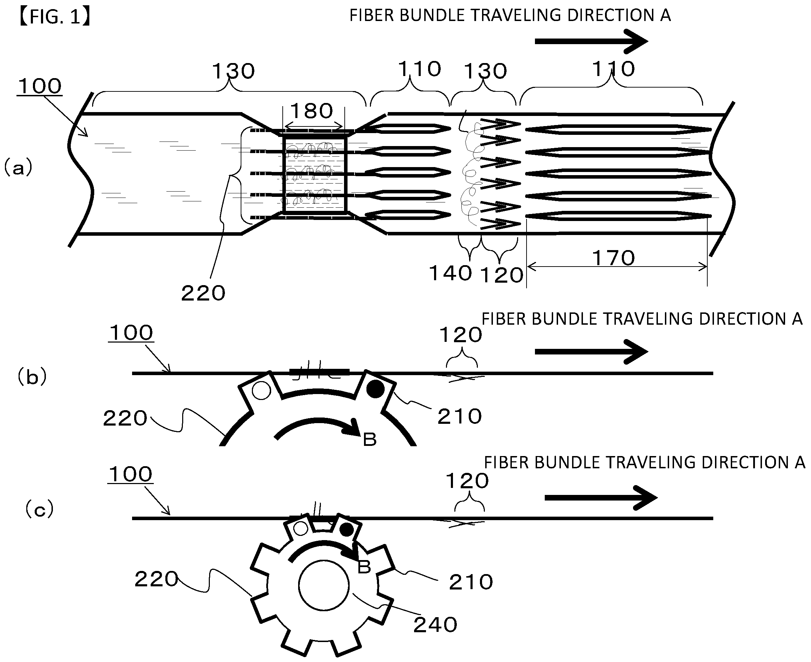

Next, a method for producing a partial split-fiber fiber bundle in the fiber bundle 100 having the splice part formed by joining the fiber bundles of the present invention will be described with reference to Fig. 1. The "partial split-fiber fiber bundle" in the present invention is a fiber bundle that has been subjected to the fiber separation processing as described above and has a cut in a part in the longitudinal direction. The "partial split-fiber fiber bundle having a splice part" in the present invention is a partial split-fiber fiber bundle having a splice part as a joint between a plurality of yarn bundles configuring the fiber bundle. Further, fiber bundles having parts in which fiber bundles are joined to each other are continuously supplied to the production step of the fiber bundles. The splice part is a part in which distal ends of the fiber bundles are entangled by a pressurized fluid or joined by a mechanical knotter as a way of improving operability and productivity.

Fig. 1(a) is a schematic plan view, Fig. 1(b) is a schematic side view, and Fig. 1(c) is another schematic side view each showing an example of a step of forming the fiber bundle 100 having a traveling splice part 180 as a partial split-fiber fiber bundle. The fiber bundle traveling direction A (arrow) in the drawings is the longitudinal direction of the fiber bundle 100, and the fiber bundle 100 having the splice part is continuously supplied from the fiber bundle supply apparatus (not shown). The fiber splitting means is a rotating fiber splitting means 220 having a protruding part 240. As described above, the fiber bundle 100 travels while undergoing a process of becoming a partial split-fiber fiber bundle by the fiber splitting means. In Fig. 1, the protruding part 210 (black circle in Fig. 1) of the rotating fiber splitting means 220 is extracted from the fiber bundle 100 immediately before the splice part 180, and the split-fiber processed part 110 ends. The protruding part 210 (black circle in Fig. 1) is extracted from the fiber bundle 100 when the rotating fiber splitting means 220 starts rotating. Then, the rotating fiber splitting means 220 rotates in a direction identical to the fiber bundle traveling direction A at the substantially identical speed, and the following protruding part 210 (white circle in Fig. 1) is thrust into the traveling fiber bundle 100 again. In this way, as shown in Fig. 1 (a), the splice part 180 is present in the split-fiber unprocessed part 130. In Fig. 1(a), a line of the rotating fiber splitting means 220 that hangs on the splice part 180 indicates that the rotating fiber splitting means 220 is rotating below the fiber bundle 100 in the splice part 180 while avoiding the fiber separation processing.

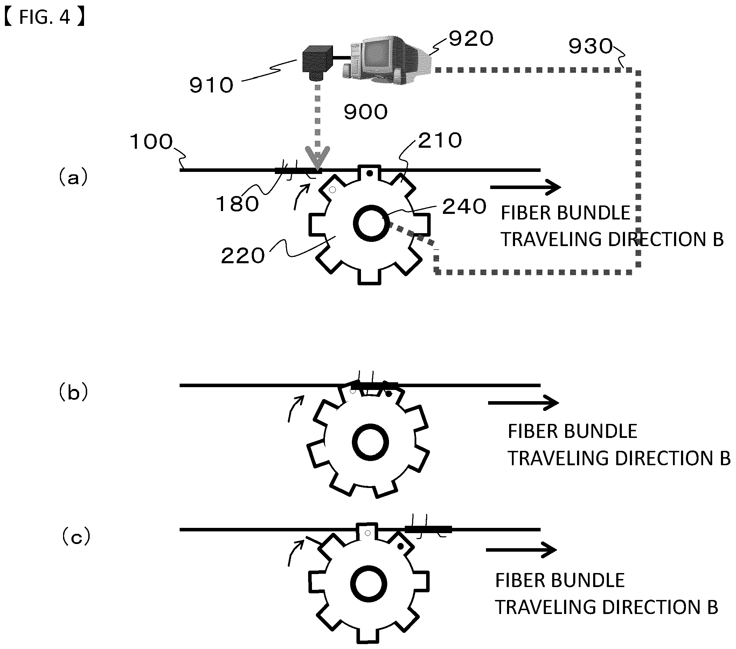

Here, a preferable configuration for the method for producing the partial split-fiber fiber bundle will be described. In Fig. 4, provided upstream are devices 900 to 930 that detect the splice part 180 when the fiber bundle 100 having the splice part 180 formed by joining the fiber bundles travels in the longitudinal direction. In an example of Fig. 4, a camera 910 that captures an image of a fiber bundle is provided at a position upstream of the rotating fiber splitting means 220. An image captured by the camera 910 is continuously sent to an image processing apparatus 920 that processes information in the width direction of the fiber bundle. Further, when the splice part 180 is detected, a speed change signal output 930 that changes the speed of the rotating fiber splitting means 220 is generated. Here, a method for detecting the splice part 180 will be described.

The traveling fiber bundle is imaged from above by the camera 910. An area camera or a line sensor camera is used for imaging. In a planar image of the imaged fiber bundle, positions of both ends related to the width direction can be recognized from the image. Then, a distance between both ends can be recognized as a fiber bundle width based on the position information of both ends. For example, in the fiber bundle having the splice part, when the fiber width is measured from continuously captured images, the width of the fiber bundle 100 gradually decreases by several tens of millimeters immediately before the splice part and keeps narrower than the normal width of the fiber bundle after entering the splice part. Then, when the splice part ends, the width gradually expands over several tens of millimeters and returns to the normal width of the fiber bundle 100. That is, it is possible to detect the splice part by determining characteristics of a profile of the fiber bundle width based on the images obtained by continuously capturing the traveling fiber bundle.

For example, the splice part is detected based on the rate of change in the width direction of the fiber bundle 100. The rate of change in the width direction is determined by the following formula in the width of the fiber bundle 100 expanded in the width direction (W1, for example 50 mm) and the width of the splice part (W2, for example 15 mm).

$$\texttt{Rate of change in width direction = (W1 - W2)/W1}$$

In the example, (50 - 15) /50 = 0.7, and the splice part is detected when the rate of change exceeds a predetermined rate of change. The rate of change in the width direction that detects the splice part varies depending on a type of fiber bundle and a step condition, but 0.4 or more is preferably used. Further, a method of detecting the splice part when the width (W2) of the splice part falls below a predetermined value is also preferably used. Then, when the splice part is detected, the timing at which the protruding part of the fiber splitting means 200 or the rotating fiber splitting means 220 is thrust into the fiber bundle is changed to avoid the fiber separation processing.

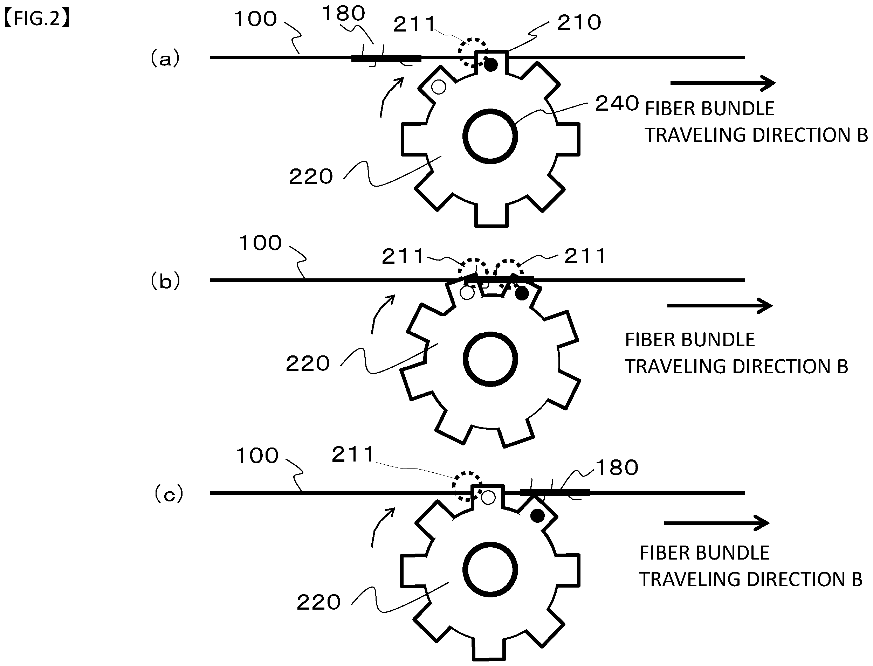

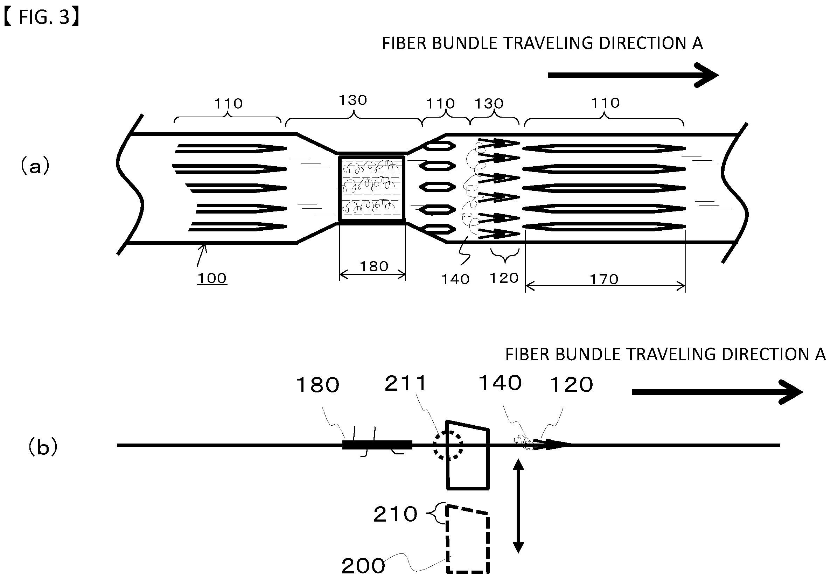

Further, the rotating fiber splitting means 220 preferably has a rotation mechanism so as to be rotatable along a rotation axis 240 orthogonal to a feeding direction of the fiber bundle having the splice part 180 shown in Figs. 1 and 2. Further, a mechanism shown in Fig. 3 in which the fiber splitting means 200 moves up and down may be preferably included. In a case of the rotating fiber splitting means 220 having the rotation mechanism shown in Fig. 2, the rotating fiber splitting means 220 is rotationally moved at a speed substantially identical to the traveling speed of the fiber bundle 100. It is thus possible to change the timing at which the protruding part 210 of the rotating fiber splitting means 220 is thrust into the fiber bundle 100. Further, when the fiber splitting means 200 shown in Fig. 3 moves up and down, the protruding part 210 of the fiber splitting means 200 is lowered immediately before the splice part 180. The protruding part 210 of the fiber splitting means 200 temporarily stops thrusting into the fiber bundle 100 while the splice part is passing. Thus, the timing when the protruding part 210 of the fiber splitting means 220 is thrust into the fiber bundle 100 is preferably delayed.

The fiber bundle used in the present invention has the splice part as the joint between the plurality of yarn bundles configuring the fiber bundle. The fiber bundle having the splice part in which the fiber bundles are joined together can be continuously supplied to the production step of the fiber bundle, and the operability and the productivity can be improved.

Further, the splice part is formed such that a part in which the distal ends of the fiber bundle are entangled with a pressurized fluid or joined by a mechanical knotter has a length of 20 mm to 150 mm in a longitudinal direction of the fiber bundle, and the length of the fiber bundle, and a basis weight of the part having length of 20 mm to 150 mm in the longitudinal direction of the fiber bundle is about twice as large as that of a normal fiber bundle.

The splice part joins the distal ends of the continuous fiber bundle that has been broken for some reason during the production step of the fiber bundle or thereafter to form a continuous fiber. Thus, the fiber bundle can be used as a product that meets a specified length depending on the use of the product, and products having a length less than the specified length can be reduced.

Since the distal ends are entangled with a pressurized fluid or joined by a mechanical knotter, the width of the fiber bundle is also narrowed only in the splice part, even though the fiber bundle is widened in a fiber bundle widening step before the fiber separation processing. However, from the viewpoint of maintaining a bonding strength necessary for passing through the widening step and continuously producing without causing yarn breakage, the yarn width of the splice part is preferably in a range of 5 mm to 20 mm, more preferably in a range 10 mm to 15 mm.

Here, in some cases, the width of the fiber bundle is also narrowed at parts other than the splice part in the fiber bundle. For example, in the first case, the fiber bundle excessively touches, for example, one side of either a guide or a groove roll present in each step (including a raw material step and the production step of the partial split-fiber fiber bundle), and then the width of the fiber bundle is narrowed. In the second case, the fiber bundle is damaged or the filaments is broken because of abnormal the conditions or the like in each step (including the raw material step and the production step of the partial split-fiber fiber bundle), and then the width of the damaged part of the fiber bundle is narrowed. Further, the width of the fiber bundle may be narrowed due to a difference in a state of the filaments such as the twisted part. On the other hand, the splice part is characterized in being in a range of 5 mm to 20 mm, more preferably in a range of 10 mm to 15 mm, and in a range of 20 mm to 150 mm in the length direction. That is, the splice part is preferably detected by distinguishing the characteristics of the splice part from the narrow width caused for other reasons. For example, when the fiber bundle contacts the guide or the groove roll and becomes narrow, the width change of the fiber bundle is smaller than the width change of the splice part, and the width of the fiber bundle is narrow for 0.5 m or more. It is therefore determined that the part is "not" the splice part. Further, in a case of the twisted part, the positions of the filaments or the like are interchanged at the twisted part, the width of the fiber bundle is narrow when the fiber separation processing is performed by bringing a fiber separation processing device into contact with the twisted part. The twisted part may be formed in a fiber bundle in which a certain number of filaments are gathered, but the fiber width of the twisted part is sharply narrowed in a short section immediately before and after the twisted part. It is therefore determined that the part is "not" the splice part. As described above, the splice part and the twisted part can be distinguished from each other by using the characteristics of the rate of change in the width of the fiber bundle. Since the splice part continues over a section of 20 mm to 150 mm in the length direction, a method different from the method for avoiding the fiber separation processing of the twisted part is used in order to avoid the fiber separation processing.

[Fiber bundle]

The fiber bundle 100 used in the present invention is not limited to a specific type of fiber as long as the fiber bundle includes a plurality of filaments. Among such fibers, reinforcing fibers are preferably used. Here, the reinforcing fiber is a fiber for resin reinforcement, and in particular, is preferably at least one selected from the group consisting of carbon fiber, aramid fiber, and glass fiber. These fibers may be used alone or in combination of two or more. Among them, the carbon fiber is particularly preferable because the carbon fiber makes it possible to provide a composite material that is lightweight and has excellent strength. The carbon fiber may be PAN-based or pitch-based, and an average fiber diameter thereof is preferably 3 $\mu$m to 12 $\mu$m, more preferably 6 $\mu$m to 9 $\mu$m.

In a case of carbon fibers, generally, a fiber bundle obtained by bundling about 1,000 to 60,000 filaments including continuous fibers is supplied as a wound body (package) wound on a bobbin. Although the fiber bundle is preferably untwisted, a twisted strand can also be used. Even if twisting occurs during transportation, the present invention is applicable. There is no restriction on the number of filaments, and when a so-called large tow having a large number of filaments is used, a price per unit weight of the fiber bundle is low. Thus, the more filaments, the lower the cost of the final product, which is preferable. Further, a form of so-called combined yarn in which the fiber bundles are collectively wound into one bundle may be used as the large tow.

When reinforcing fibers are used, the fibers are preferably surface-treated in order to improve adhesiveness with a matrix resin when the reinforcing fiber composite material is formed. Examples of surface treatment methods include electrolytic treatment, ozone treatment, and ultraviolet treatment. Further, a sizing agent may be added in order to prevent fluffing of the reinforcing fibers, improve convergence of reinforcing fiber strands, and improve the adhesiveness with the matrix resin. The sizing agent is not limited, but a compound having a functional group such as an epoxy group, a urethane group, an amino group, and a carboxyl group can be used, which may be used alone or in combination of two or more.

The fiber bundle used in the present invention is preferably in a pre-bundled state. Here, the pre-bundled state is, for example, a state of being bundled by entanglement of the filaments configuring the fiber bundle, a state of being bundled by a sizing agent applied to the fiber bundle, and a state of being bundled by a twist formed by being included in the production step of the fiber bundle.

[Unwinding]

The step of producing the partial split-fiber fiber bundle preferably include an unwinding device that feeds out the fiber bundle, a fiber splitting means provided with a plurality of protruding parts that separates the fiber bundle, a control device that thrusts and extracts the fiber splitting means into and from the fiber bundle, and a winding device that winds the separated partial split-fiber fiber bundle.

In any case, an unwinding direction of the fiber bundle in which the fiber bundle is unwound from an unwinding apparatus (not shown) that unwinds the fiber bundle disposed upstream in the traveling direction of the fiber bundle can include a horizontal drawing method of drawing in a direction orthogonal to the rotation axis of the bobbin, and a vertical drawing method of drawing in a direction identical to that of the rotation axis of the bobbin (paper tube), but is preferably the horizontal drawing method considering there are fewer unwound twists.

Further, an installation posture of the bobbin during unwinding can be in any direction. Above all, when the bobbin is thrust into a creel and installed in a state where an end surface of the bobbin on a side other than a creel rotation axis fixing surface faces in a direction other than the horizontal direction, the bobbin is preferably held while a certain tension is applied to the fiber bundle. When a certain tension is not applied to the fiber bundle, the fiber bundle slips off from the package (wound body formed by the fiber bundle wound on the bobbin) and leaves the package, or the fiber bundle that has left the package winds around the creel rotation axis. This may make it difficult to unwind the fiber bundle.

Further, an applicable method of fixing the rotation axis of the unwinding package other than the method of using the creel is a surface unwinding method in which the package is put on two rollers arranged in parallel with each other so as to be parallel with the rollers, and the fiber bundle is unwound so as to roll the package on the arranged rollers.

In a case of unwinding using the creel, a method can be considered in which a belt is hung on the creel, one end of the belt is fixed, and a weight is hung on the other end or the other end is pulled by a spring, for example, to apply a break to the creel, and thus a tension is applied to the unwinding fiber bundle. In this case, varying a braking force according to a winding diameter is effective as a way of stabilizing the tension.

Further, the number of filaments after the separation can be adjusted by a method of widening the fiber bundle and by a pitch of a plurality of fiber splitting means disposed side by side in the width direction of the fiber bundle. Reducing the pitch of the fiber splitting means and providing more fiber splitting means in the width direction of the fiber bundle enable a so-called thin bundle having a smaller number of filaments to be subjected to the fiber separation processing. Further, the number of filaments can be also adjusted by expanding the width of the fiber bundle before performing the fiber separation processing and by separating the expanded fiber bundle with more fiber splitting means without narrowing the pitch of the fiber splitting means.

Here, widening means a process of widening the width of the fiber bundle 100. The widening method is not limited, and a vibration widening method of passing a vibrating roll, an air widening method of blowing compressed air, and the like are preferable.

[Fiber splitting means]

In the fiber splitting means, a blade (protruding part 210) thrust into the fiber bundle advances while splitting the fiber bundle in the longitudinal direction and separates the fiber bundle. Since the blade enters and splits the fine bundle, there is a speed difference between a movement of the fiber bundle and a movement of the fiber splitting means. Here, the speed difference may be caused by moving the fiber bundle and not moving the fiber splitting means, or may be caused by moving the fiber splitting means and not moving the fiber bundle. Further, there is a speed difference although both may move. Furthermore, the blade thrust into the fiber bundle can be extracted, and the partial fiber separation processing is achieved by repeatedly thrusting and extracting.

Examples of the fiber splitting means applicable to the present invention will be described. A form of the fiber splitting means is preferably, for example, a blade having an edge with a protruding plate tip, a plurality of blades formed on a moving belt such as a caterpillar, or a plurality of protruding edges formed on a circumferential surface of a disk having a rotation axis. In the fiber separation processing, the protruding part 210 of the fiber splitting means 200 or the rotating fiber splitting means 220 is thrust into the fiber bundle 100, and then the fiber bundle 100 moves but the protruding part 210 does not move while the fiber bundle 100 and the protruding part 210 are in contact with each other. The speed difference allows the fiber separation processing to be performed. In the case of the blade having an edge with a protruding plate tip, the partial fiber separation processing is obtained by, for example, moving the blade up and down to thrust and extract the blade into and from the fiber bundle. In the case of a plurality of blades formed on a moving belt or a rotary blade having a plurality of protrusions, the protrusions are thrust and subsequently extracted by the movement or rotation. Thus, the fiber separation processing is partially performed. The split-fiber processed part 150 is a section where the fiber separation processing can be performed. For example, in the case of the blade-shaped fiber splitting means 200, the split-fiber processed part 150 corresponds to the protruding part 210 shown in Fig. 6 (a). Further, in the case of the rotating fiber splitting means 240 having the plurality of protruding parts 210, the split-fiber processed part 150 corresponds to a section between one of the protruding parts 210 and the adjacent protruding part 210.

[Thrust and extraction: Time]

In the fiber separation processing of partially separated fibers, generally, the split-fiber processed part 110 is formed by repeatedly thrusting and extracting the fiber splitting means 200 (Fig. 6). The timing of re-thrusting is preferably set by elapsed time after the fiber splitting means 200 is extracted. Further, the timing of re-extracting is also preferably set by elapsed time after thrusting the fiber splitting means 200. By setting the timing of thrust and/or extraction by time, the split-fiber processed part 110 and the split-fiber unprocessed part 130 at a predetermined distance interval can be generated. The ratio of the split-fiber processed part 110 and the fiber processing section 130 can be also arbitrarily determined. A predetermined time interval may always be the same, but may be lengthened or shortened depending on the distance the fiber separation processing has advanced. Alternatively, in accordance with a state of the fiber bundle at that time, for example, when the fiber bundle originally has a little fluff or few entangled filaments, the predetermined time interval may be shortened or changed depending on the situation.

[Extraction: Pressing force, tension, and tension difference]

As shown in Fig. 6, when the fiber splitting means 200 is thrust into the fiber bundle 100, the generated entangled part 160 continuously presses the protruding part 210 as the fiber separation processing progresses. The fiber splitting means 200 is under the pressing force from the entangled part 160.

As described above, the plurality of filaments is not substantially aligned in the fiber bundle 100, there are many parts in which the filaments are entangled, and there may be parts including more entanglement and parts including less entanglement in the longitudinal direction of the fiber bundle 100. The pressing force during the fiber separation processing increases faster in the parts including more entanglement of filaments. Conversely, the pressing force increases more slowly in the parts including less entanglement of filaments. It is therefore preferable that the fiber splitting means 200 includes a pressing force detection device that detects the pressing force from the fiber bundle 100.

Further, since the tension of the fiber bundle 100 may change before and after the fiber splitting means 200, at least one tension detection device that detects the tension of the fiber bundle 100 may be provided near the fiber splitting means 200, or a plurality of tension detection device may be provided to calculate a tension difference. The detection device for the pressing force, the tension, and the tension difference may be provided individually or in combination. Here, the tension detection device that detects the tension is preferably disposed in a range of 10 mm to 1,000 mm apart from at least either before or after the fiber splitting means 200 along the longitudinal direction of the fiber bundle 100.

The pressing force, the tension, and the tension difference preferably control extraction of the fiber splitting means 200 in accordance with the detected values. The fiber splitting means 200 is more preferably controlled to be extracted when the detected values exceed predetermined upper limits as the detected values rise. The upper limits of the pressing force and the tension are preferably set to 1 N/mm, and the upper limit of the tension difference is preferably set to 0.8 N/mm. The upper limit may be changed within a range of $\pm$ 10% depending on the state of the fiber bundle. Here, the unit (N/mm) of the pressing force, the tension, and the tension difference indicates the force acting per width of the fiber bundle 100. When the pressing force, the tension, and the tension difference are set low, the values reach the pressing force, the tension, and the tension difference for extracting the fiber splitting means 200 immediately after the fiber splitting means 200 is thrust. Thus, a sufficient fiber separation distance cannot be obtained, the split-fiber processed part 110 becomes too short, and a fiber bundle subjected to the partial fiber separation processing cannot be obtained. On the other hand, when the pressing force, the tension, and the tension difference are set high, more filaments are cut in the fiber bundle 100 before the values reach the pressing force, the tension, and the tension difference for extracting the fiber splitting means 200 after the fiber splitting means 200 is thrust. Thus, problems are likely to occur such as the fiber bundles subjected to the fiber separation processing sticking out like split ends and more fluff being generated. The split ends sticking out are easily wound around a roll being conveyed, and fluff is accumulated on a drive roll to cause slippage in the fiber bundle, thus making it easy to cause conveyance defects. It is therefore preferable to adjust the pressing force, the tension, and the tension difference in accordance with the fiber separation processing step.

Unlike the case of controlling the extraction timing of the fiber splitting means 200 by time, when the pressing force, the tension, and the tension difference are detected, the fiber splitting means 200 is extracted before a force enough to cut the fiber bundle 100 is applied during the fiber separation processing. Thus, an excessive force is not applied to the fiber bundle 100, and continuous fiber separation processing is possible.

Here, variation of the pressing force, the tension and the tension difference generated in the part where the filaments are entangled often does not cause the pressing force, the tension and the tension difference in the splice part. Thus, in order to detect the splice part, a method of observing a width variation of the fiber bundle in the width direction is preferably used instead of the pressing force or the tension. Specifically, it is preferable to continuously measure the fiber bundle with images of a camera or the like and detect the images by the rate of width change in the width direction. Further, since the time for avoiding the twist and the splice part and the timing of thrusting are different, a position information on where the splice part is generated and information on the longitudinal direction length of the splice part in images are preferably detected when the twisted part and the splice part are determined. Hereinafter, the detection of the splice part by the image will be described.

[Image detection]

The fiber bundle 100 having the splice part is traveling while performing the above fiber separation processing (Fig. 4). An imaging device that detects the fiber bundle width of the fiber bundle 100 is also preferably provided at least one upstream side along the longitudinal direction of the fiber bundle 100 from the fiber splitting means 200 that is thrust into the fiber bundle 100 in a range of 10 mm to 1,000 mm away from the traveling fiber bundle. In Fig. 4, the detection camera 910 is exemplified as the imaging device. By this imaging, the position of the splice part 180 (narrow width part) is specified in advance, and based on the result, a preset mode is controlled so as not to thrust the fiber splitting means 200 into the splice part 180. This can prevent yarn breakage of the fiber bundle due to thrusting. Further, when the splicing section 180 approaches the thrust fiber splitting means 200, the fiber splitting means 200 is extracted, that is, the splice part 180 is not subjected to the fiber separation processing. This can prevent breakage of the splice part due to thrusting.

An operation of the splice part approaching the rotating fiber splitting means 220 will be described. The detection camera 910 that captures an image of the fiber bundle is installed at a position of 10 mm to 1,000 mm upstream from the fiber splitting means in a flow direction of the fiber bundle. As shown in Fig. 1, the fiber bundle width of the splice part is gradually narrowed over several tens of millimeters, and the fiber width of the splice part is narrowed to 30% to 70% of the width of the fiber bundle before and after the splice part. In order to determine the timing of rotating the rotating fiber splitting means at the substantially identical speed, a distance (m) from the position where the splice part immediately before the splice part (up to several tens of millimeters) is detected to the fiber splitting means is divided by a moving speed (m/min) of the fiber bundle. It is determined how many seconds it takes to start the rotation after the rotation start time. The timing for starting the rotation is transmitted as a pulse signal to a motor control unit such as the rotation axis. Further, the narrowed length (m) is obtained from the detected image of the splice part, and the time for rotating at the identical speed is obtained from the moving speed of the fiber bundle. After the splice part has passed, the timing for stopping the rotation is transmitted as a pulse signal to the motor control unit such as the rotation axis to restore a normal operating state.

Next, an operation of the splice part approaching the fiber splitting means 210 will be described. The detection camera 910 that captures an image of the fiber bundle is installed at a position of 10 mm to 1,000 mm upstream from the fiber splitting means in a flow direction of the fiber bundle. As shown in Fig. 3, in the splice part, the fiber bundle width gradually narrows over several tens of millimeters. When the splice part is detected, the protruding part 210 of the fiber splitting means 200 is extracted from the fiber bundle 100, and the thrust is stopped. In order to determine the timing for starting the stop and the time to stop, the distance (m) from the position where the splice part is detected to the fiber splitting means is divided by the moving speed (m/min) of the fiber bundle. Then, the stop start time and how many seconds later the stop is started are determined. Further, the narrowed length (m) is determined from the detected image of the splice part, and the time for stopping the thrusting is determined from the moving speed of the fiber bundle. After the splice part has passed, the protruding part 220 of the fiber separation processing device 210 is thrust again to restore the normal operating state.

[Speed change (the traveling speed of the fiber bundle is substantially identical to the rotation speed of the rotating fiber splitting means]

As shown in Fig. 4, an image calculation processing apparatus 920 that calculates an image obtained by the imaging device (for example, the detection camera 910) may be further provided. A rotation speed control device (for example, a speed change signal output 930 to the motor) that controls the rotation speed of the rotating fiber splitting means 220 based on the calculation result of the image calculation processing apparatus 920 may be further provided. For example, when the image calculation processing apparatus 920 detects the splice part 180, it is possible to achieve an improved passage when the splice part 180 passes through the fiber splitting means 200. Specifically, when the detection camera 910 as the imaging device detects the splice part 180, it is preferable to set the mode in which the speed of the rotating fiber splitting means 220 is controlled such that the protruding part 210 of the rotating fiber splitting means 220 can contact the splice part 180 as least as possible from immediately before the protruding part 210 contacts the splice part 180 until the protruding part 210 passes through the splice part 180. Specifically, when the splice part 180 is detected, it is preferable that the speed of the fiber bundle traveling in the longitudinal direction and the rotation speed of the rotating fiber splitting means 220 become the substantially identical speed. The "substantially identical speed" is preferably a mode in which the rotation speed of the rotating fiber splitting means 220 is rotated at a speed of 100% to 95% of the traveling speed of the fiber bundle. When the rotation speed exceeds or falls below this range, the protruding part 210 may catch a part of the splice part 180, and the broken fiber bundle may be wound around the rotating fiber splitting means 220.

In a configuration in which a plurality of fiber splitting means 200 is present in the width direction of the fiber bundle 100 and is disposed at equal intervals, when the width of the fiber bundle 100 changes, the number of separated filaments also changes. Thus, the fiber separation processing may not be performed with a stable number of filaments. Further, when the twist is forcibly subjected to the fiber separation processing, a large amount of fluff is generated in the filaments of the fiber bundle 100. This increases the size of the entanglement accumulation part 120 in which the entangled part 160 is accumulated. The large entanglement accumulation part 120, which is left, is easily caught in the fiber bundle 100 unwound from the wound body.

[Avoidance of twisted part by fast feed]

When the twist of the fiber bundle 100 is detected, the traveling speed of the fiber bundle 100 may be changed in addition to the control such that the fiber splitting means 200 is not thrust into the twist. Specifically, after detecting the twist, at timing when the fiber splitting means 200 is extracted from the fiber bundle 100, the traveling speed of the fiber bundle 100 is increased until the twist passes through the fiber splitting means 200. Thus, the twist can be efficiently avoided.

[rotating fiber splitting means]

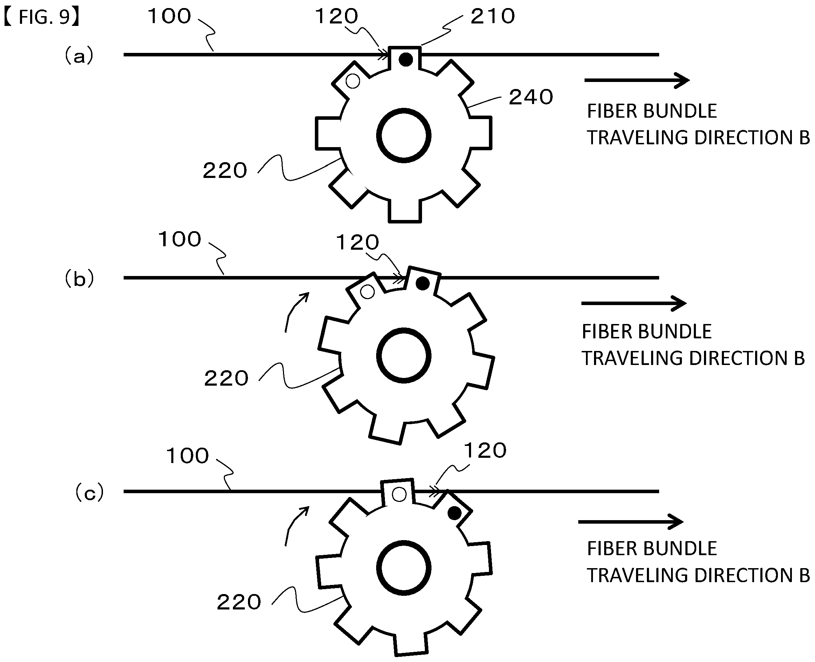

Hereinafter, the method for avoiding the splice part (Fig. 2) using the rotating fiber splitting means that applicable to the present invention and the method for avoiding the twisted part and the like (Fig. 9) will be described in comparison. In Fig. 9, the entanglement accumulation part 120 and the like are generated due to the normal fiber separation processing. In addition to simply thrusting the fiber splitting means 200 having the protruding part 210 into the fiber bundle 100, it is also a preferable aspect to use the rotating fiber splitting means 220 as the fiber splitting means. Figs. 9(a) to 9(c) are explanatory diagrams each showing an example of a moving cycle in which the rotating fiber splitting means is thrust. The rotating fiber splitting means 220 has a rotation mechanism including a rotation axis 240 orthogonal to the longitudinal direction of the fiber bundle 100, and a protruding part 210 is provided on a outer surface of the rotation axis 240. When the fiber bundle 100 travels along a fiber bundle traveling direction B (arrow) in the drawing, the protruding part 210 provided on the rotating fiber splitting means 220 is thrust into the fiber bundle 100, and the fiber separation processing starts. Here, although not shown in the drawing, the rotating fiber splitting means 220 preferably has a rotation speed control mechanism, a pressing force detection mechanism, and a rotation stop position holding mechanism. By these mechanisms, the rotation stop position is maintained at the position indicated in Fig. 9(a) and the separation is continued until a predetermined pressing force acts on the rotating fiber splitting means 220. When the predetermined pressing force is exceeded due to the occurrence of the entangled part 160 or the entanglement accumulation part 120 in the protruding part 210, the rotating fiber splitting means 220 starts to rotate as shown in Fig. 9(b). Subsequently, as shown in Fig. 9(c), the protruding part 210 (black circle in Fig. 9) is extracted from the fiber bundle 100, and the following protruding part 210 (white circle in Fig. 9) is thrust into the fiber bundle 100. As the operations of Figs. 9(a) to 9(c) are shorter, the split-fiber unprocessed part becomes shorter. Thus, when it is desired to increase a proportion of the split-fiber processed part of the fiber bundle, the operations of Figs. 9(a) to 9(c) are preferably be shortened. The entangled part 160 and the entanglement accumulation part 120 are blocked by the immovable protruding part 210 that is in contact with the traveling fiber bundle and gathered. It is therefore effective to detect an increase in the pressing force, quickly extract the protruding part 210, and release the entangled part 160 and the entanglement accumulation part 120. The protruding part 210 causes less damage to the fiber bundle even when the protruding part 210 is extracted faster than the moving speed of the fiber bundle, and can be preferably used. That is, there is a speed difference between the moving speed of the traveling fiber bundle and the speed of thrusting and extracting the fiber splitting means 200 or the rotation speed of the rotating fiber splitting means 220.

Meanwhile, Fig. 2 shows a method for fiber separation processing of the fiber bundles having the splice part. In addition to simply thrusting the fiber splitting means 200 having the protruding part 210 into the fiber bundle 100, it is also a preferable aspect to use the rotating fiber splitting means 220 as the fiber splitting means. When the fiber bundle is subjected to the fiber separation processing, the rotation of the rotating fiber splitting means is intermittently rotated in accordance with the occurrence of the entangled part, the twisted part, and the like. Figs. 2(a) to 2(c) are explanatory views each showing an example of a moving cycle in which the rotating fiber splitting means 220 is thrust into the fiber bundle having the splice part. The rotating fiber splitting means 220 has a rotation mechanism including a rotation axis 240 orthogonal to the longitudinal direction of the fiber bundle 100, and a protruding part 210 is provided on a outer surface of the rotation axis 240. When the fiber bundle 100 travels along a fiber bundle traveling direction B (arrow) in the drawing, the protruding part 210 provided on the rotating fiber splitting means 220 is thrust into the fiber bundle 100, and the fiber separation processing starts. Here, although not shown in the drawing, the rotating fiber splitting means 220 preferably has a rotation speed control mechanism, a pressing force detection mechanism, and a rotation stop position holding mechanism. By these mechanisms, until the splice part 180 is detected by a yarn width detection unit 900 and the detection camera 910, the rotating fiber splitting means 220 maintains the rotation stop position and continues the fiber separation at the position indicated in Fig. 2(a) for a predetermined time set in advance. After that, when the splice part 180 is detected by the yarn width detection unit 900 and the detection camera 910 as shown in Fig. 4(a), it is preferable to set the mode in which the speed of the rotating fiber splitting means 220 is controlled such that the protruding part 210 can contact the splice part 180 as least as possible as shown in Fig. 4(b) from immediately before the protruding part 210 contacts the splice part 180 until the protruding part 210 passes through the splice part 180. Specifically, when the splice part 180 is detected, it is preferable that the speed of the fiber bundle traveling in the longitudinal direction and a peripheral speed of the rotating fiber splitting means 220 become the substantially identical speed. This is because when the speed difference occurs, the protruding part 210 that has been thrust and the splice part 180 are in contact with each other for a long time, and thus the single yarn configuring the fiber bundle 100 including the splice part 180 is greatly damaged. A contact distance is determined by the speed and contact time, and the longer the contact time, the longer the contact distance. Another reason is that when the peripheral speed of the rotating fiber splitting means 210 is increased in order to shorten the contact time, the number of times the protruding part 210 is thrust is increased, and the single yarn configuring the fiber bundle 100 is greatly damaged. The term "substantially identical speed" as used herein means that the peripheral speed of the rotating fiber splitting means 220 is rotated and operated at a speed of 100% to 95% of the fiber bundle traveling speed.

Here, the interval between the protrusions of the protruding parts 210 on the surface of the rotating fiber splitting means 220 will be described. By arranging multiple protruding parts 210 on the rotating fiber splitting means 220, it is possible to obtain the fiber bundle 100 with a high ratio of fiber separation processing and to extend the life of the rotating fiber splitting means 220. The fiber bundle with a high ratio of fiber separation processing is a fiber bundle with a longer section that has been subjected to a fiber separation processing in the fiber bundle, or a fiber bundle that has an increased frequency of occurrence of the split-fiber processed part and the split-fiber unprocessed part. Further, as the number of the protruding parts 210 provided on one rotating fiber splitting means 220 increases, the life of the protruding parts 210 can be extended by reducing the frequency of contact with the fiber bundle 100 and abrasion of the protruding parts 210. The number of the protruding parts 210 provided is preferably 3 to 12 disposed at a disk-shaped outer edge at equal intervals, and more preferably 4 to 8. As shown in Fig. 1(b), the interval between the adjacent protruding parts 210 may be equal to or longer than the length of the splice part in order to minimize contact with the protruding parts 210 at the splice part. Further, as shown in Fig. 1(c), the interval may be less than the length of the splice part. Even when the interval between the adjacent protruding parts 210 is shorter than the length of the splice part, each tooth of the protruding parts 210 is only inserted by the rotation at the identical speed, and no stress accompanied by displacement is generated. The damage to the fiber bundle is therefore kept low. As described above, even when the splice part is present in the partial split-fiber fiber bundle, it is possible to prevent the splice part from contacting the protruding part 210 of the rotating fiber splitting means 220 and breaking. The fiber bundle can be therefore subjected to the fiber separation processing stably for a long time. Further, an inexpensive large tow having the splice part can be continuously subjected to the fiber separation processing. This can reduce material costs and production costs of the molded article.

Further, it is preferable that the method of fiber separation processing for the splice part is preferably compatible with the method of fiber separation processing for the twisted part or the like. In order to obtain the fiber bundle 100 having a stable fiber bundle width, the rotating fiber splitting means 220 preferably has an imaging device that detects a twist. Specifically, in a normal occasion until the imaging device detects a twist, the rotating fiber splitting means 220 performs the fiber separation processing by intermittently repeating rotation and stop. When a twist is detected, the fiber bundle width can be stabilized by increasing the rotation speed of the rotating fiber splitting means 220 compared with the normal rotation speed and/or by shortening the stop time. In the partial fiber separation processing, the rotating fiber splitting means 220 may always be continuously rotated in addition to the method of intermittently repeating rotation and stop of the rotating fiber splitting means 220. At that time, either one of the traveling speed of the fiber bundle 100 or the rotation speed of the rotating fiber splitting means 220 may be relatively increased or decreased. Adjusting the relative speed allows fiber separating operation to be freely controlled.

[Fiber splitting means: vertical reciprocating motion]

The present invention may further have a vertical reciprocating mechanism in which the fiber splitting means 200 or the rotating fiber splitting means 220 is thrust and extracted by reciprocating motion of the fiber splitting means 200 or the rotating fiber splitting means 220. Further, it is also a preferable aspect that the present invention further has a vertical reciprocating mechanism for vertically reciprocating the fiber splitting means 200 or the rotating fiber splitting means 220 along the feeding direction of the fiber bundle 100. As the vertical reciprocating mechanism, a linear actuator of a compressed-air or electric cylinder or slider may be used.

Even when the fiber bundle including the splice part is used, the present invention may further have the vertical reciprocating mechanism in which the fiber splitting means 200 or the rotating fiber splitting means 220 are thrust and extracted by vertical reciprocating motion of the fiber splitting means 200 or the rotating fiber splitting means 220. Further, it is also a preferable aspect that the present invention further has a vertical reciprocating mechanism for vertically reciprocating the fiber splitting means 200 or the rotating fiber splitting means 220 along the feeding direction of the fiber bundle 100.

Here, although not shown in the drawing, until the splice part 180 is detected by the yarn width detection unit 900 and the detection camera 910, the fiber splitting means 200 or the rotating fiber splitting means 220 intermittently repeats the vertical reciprocating motion for a predetermined time set in advance. After that, when the splice part 180 is detected by the yarn width detection unit 900 and the detection camera 910, it is preferably to control such that the fiber splitting means 200 or the rotating fiber splitting means 220 has been extracted from the fiber bundle 100 including the splice part from immediately before a contact with the detected splice part 180 until a passage through the splice part 180. As the reciprocating mechanism, a linear actuator of a compressed-air or electric cylinder or slider may be used.

[Corner part]

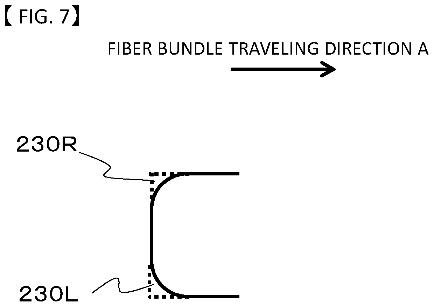

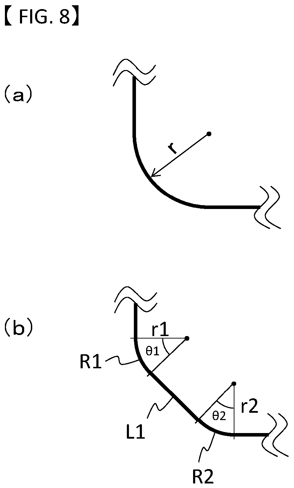

As shown in Fig. 7, a tip of the contact part of the protruding part 210 with the fiber bundle 100 preferably has rounded corner parts. The corner parts 230L and 230R of the protruding part 210 are each preferably formed in a curved shape as an entire corner part, such as an arc (curvature radius: r) as shown in Fig. 8(a), or a combination of partial arcs R1 and R2 (angle range: θ1 and θ2, curvature radius: r1 and r2) and a straight line L1 as shown in Fig. 8(b).

When the shape of the corner parts is insufficient and sharp, the filaments are likely to be cut, and the fiber bundle 100 may stick out like split ends or generate more fluff during the fiber separation processing. This may cause conveyance defects. For example, split ends sticking out may be wound around a roll being conveyed, and fluff may be accumulated on the drive roll to cause slippage in the fiber bundle. Further, the cut filaments may become fluff and cause formation of the entangled part. The entanglement accumulation part formed by accumulating the entangled part is easily caught in the fiber bundle unwound from the wound body when becoming large.

The curvature radius r in Fig. 8(a) is preferably a dimension obtained by multiplying a plate thickness dimension of the contact part by 0.01 to 0.5, and more preferably by 0.01 to 0.2. Further, a plurality of arc parts in Fig. 8(b) may be provided. The arc parts and the straight part can be set arbitrarily.

[Method for producing intermediate base material]

In the present invention, the intermediate base material is a fiber-reinforced resin sheet obtained by impregnating a mat including discontinuous reinforcing fibers with a thermosetting resin and/or a thermoplastic resin. The sheet is a composite of reinforcing fibers such as carbon fibers and a resin material, and is a sheet-shaped base material in a state where fiber bundles such as carbon fibers are dispersed or arranged in the resin material. This sheet-shaped base material is laminated in accordance with the structure of the product, and is formed into a composite product by, for example, pressure molding.

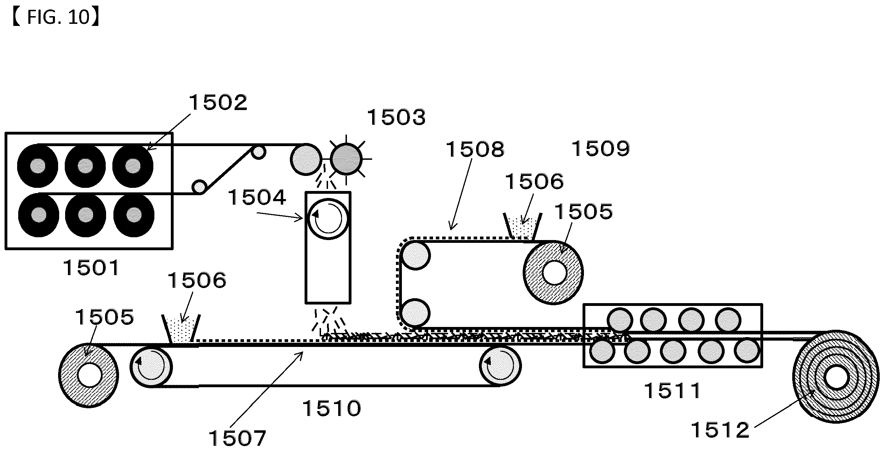

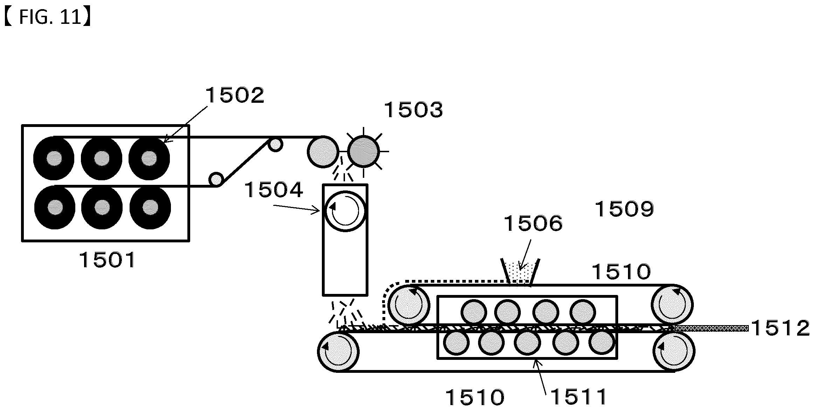

Examples of the method for producing the intermediate base material include a method including the following (1) coating step, (2) cutting step, and (3) resin impregnation step as shown in Figs. 10 and 11. In general, the intermediate base material is produced by SMC processing. Fig. 10 shows an example of a production step of the intermediate base material in a case of coating a thermosetting resin. Fig. 11 shows an example of a production step of the intermediate base material in a case of coating a thermoplastic resin. As shown in Figs. 10 and 11, a partial split-fiber fiber bundle 1502 in a roll body is unwound from a creel 1501 and cut into a predetermined length in a cutting step 1503. At this time, a cutting direction is at an angle θ (0° < θ ≦ 90°) with respect to the longitudinal direction of the partial split-fiber fiber bundle. Then, the partial split-fiber fiber bundle passes through a dispersion mechanism 1504 and becomes pieces of the split fiber bundle, and the pieces are scattered on a resin compound 1506. Further, the pieces are conveyed to a resin impregnation step 1511 and becomes an intermediate base material 1512. Then, the intermediate base material 1512 is once wound into a roll for a subsequent step. Hereinafter, steps (1) to (3) will be described in detail.

(1) Coating step 1509: When a resin to be coated is a thermosetting resin, a paste including the resin is coated onto a first sheet 1507 and a second sheet 1508 that are conveyed in a predetermined direction (Fig. 10). Further, when the resin to be coated is a thermoplastic resin, the resin is sprinkled over the cut fiber bundle (Fig. 11).

Examples of the thermosetting resin include unsaturated polyester resin, epoxy resin, vinyl ester resin, phenol resin, epoxy acrylate resin, urethane acrylate resin, phenoxy resin, alkyd resin, urethane resin, maleimide resin, and cyanate resin. As the thermosetting resin, one kind may be used alone, or two or more kinds may be used in combination. The thermosetting resin may also be a copolymerized product.

Examples of the thermoplastic resin include polyolefin resin, polyamide resin, polyester resin, polyphenylene sulfide resin, polyether ketone resin, polyether sulfone resin, and aromatic polyamide resin. As the thermoplastic resin, one kind may be used alone, or two or more kinds may be used in combination. The thermosetting resin may also be a copolymerized product.

In addition to the thermosetting resin and/or the thermoplastic resin, a mixture of a filler such as calcium carbonate, a shrinkage reducing agent, a release agent, a curing initiator, and a thickener may be used.

(2) Cutting step 1503: The traveling partial split-fiber fiber bundle is cut into a predetermined length by using a cutter blade. The cutting direction is at the angle θ (0° < θ ≦ 90°) with respect to the longitudinal direction of the partial split-fiber fiber bundle, but the angle θ is more preferably 8° to 20°. Making an angle with respect to the longitudinal direction allows the subsequent resin to be well impregnated, and this is a favorable state. When the resin to be coated is a thermosetting resin, a continuous fiber bundle is cut by a cutting machine and scattered on the first sheet 1507 conveyed in a predetermined direction (Fig. 10). When the resin to be coated is a thermoplastic resin, a continuous fiber bundle is cut by a cutting machine and scattered on a conveyor belt conveyed in a predetermined direction (Fig. 11).

At this time, the dispersion mechanism may be used after cutting in order to disperse the fiber bundle so as to have a uniform basis weight and a uniform thickness. As the dispersion mechanism, a mechanism for allowing the cut fiber bundle to collide with a rotating roll having protrusions, a mechanism for blowing air to the cut fiber bundle, or the like can be used.

(3) Resin impregnation step 1511: When the resin to be coated is a thermosetting resin, the second sheet 1508 coated with the paste is overlapped on the first sheet 1507 on which the fiber bundle is scattered, and then the paste and the fiber bundle that are interposed between the first sheet 1507 and the second sheet 1508 are pressed. Thus, the resin is impregnated between the filaments of the fiber bundle (Fig. 10). When the resin to be coated is a thermoplastic resin, the conveyor belt on which the fiber bundle and the thermoplastic resin are scattered is overlapped with a conveyor belt from above, and pressed under heating. Thus, the resin is impregnated between the filaments of the fiber bundle (Fig. 11).

[Method for producing molded article]

Examples of the method for producing the molded article include a method having the following pressing step.

Pressing step: After the intermediate base material is cut into a predetermined size, the intermediate base material is pressed by a pressurizing press machine and pressed under a heating condition for a predetermined time.

[Method for evaluating the number of splitting of the partial split-fiber fiber bundle]

The partial split-fiber fiber bundle is cut in the longitudinal direction and used in an SMC step. A method for evaluating in advance whether a distribution state is good before performing the SMC processing as the subsequent step by confirming the ease of splitting the cut partial split-fiber fiber bundle will be described.

In the present invention, the "number of splitting" represents the split state as the number of bits (pieces) with a cut due to the separation as a starting point, the split state being a state of the partial split-fiber fiber bundle separated by an impact given to the fiber bundle cut into any length after the partial split-fiber fiber bundle wound in a bobbin shape (width of 20 mm to 100 mm) is unwound. Among the split pieces of the fiber bundle, one piece weighing 0.0007 g or more is counted as one. The number of splitting is a positive integer, and is preferably measured 10 times and an average value up to the first decimal place is preferably used.

In the method for evaluating the number of splitting used in the present invention, a partial split-fiber fiber bundle obtained by the method for producing a partial split-fiber fiber bundle is cut into any length, an impact is given to the cut partial split-fiber fiber bundle, and then the number of splitting of the partial split-fiber fiber bundle is confirmed. It has been found that this evaluation method is suitable for the purpose of confirming in advance the dispersion state of the partial split-fiber fiber bundle in (2) cutting step of the SMC step.

The condition for the cut length of the partial split-fiber fiber bundle in the present invention is preferably 5 mm or more and less than 35 mm, and more preferably 10 mm or more and less than 21 mm.

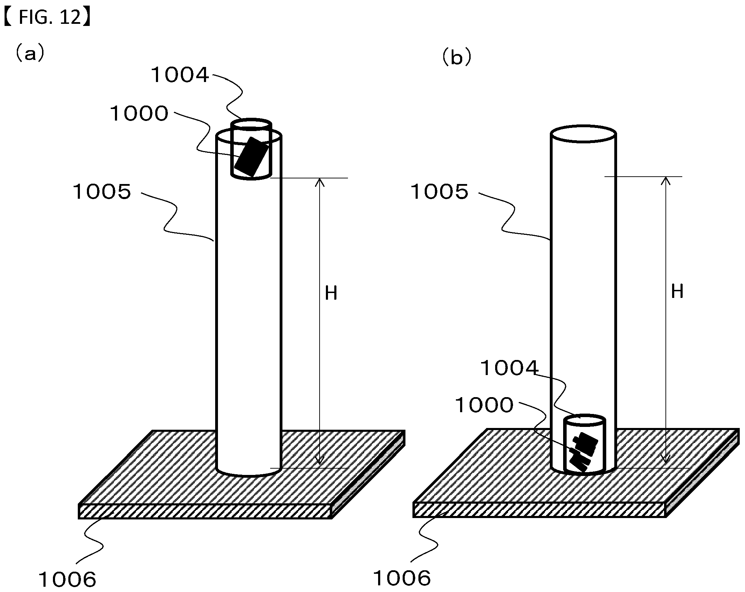

Further, in a method for giving an impact to the cut partial split-fiber fiber bundle in the present invention, the partial split-fiber fiber bundle is preferably put into an arbitrary container and dropped from an arbitrary height to give an impact. Fig. 12 is a schematic view showing an example of how to give an impact in the method for evaluating the number of splitting. In Fig. 12(a), the cut partial split-fiber fiber bundle 1000 is enclosed in a container 1004 and is allowed to freely fall from an upper part of a cylindrical guide 1005 having a height H to a bottom plate 1006. Fig. 12(b) shows a state in which the partial split-fiber fiber bundle 1000 that has freely fallen is split into pieces due to the impact of a collision with the bottom plate. The condition for giving an impact at this time is a condition in which acceleration of 80 m/s$^2$ or more is preferably applied for 60 ms or acceleration of 250 m/s$^2$ or less is preferably applied for 60 ms, and more preferably, acceleration of 90 m/s$^2$ or more is applied for 60 ms or acceleration of 120 m/s$^2$ or less is applied for 60 ms. The "acceleration of 90 m/s$^2$ × 60 ms" is related to a free fall velocity, and represents a strength of the impact (impulse) by accumulating over time (60 msec) the acceleration (90 m/s$^2$) obtained by the free fall.

Further, the container in which the cut partially separated fiber is put in the present invention is preferably the container 1004 made of a material capable of withstanding the impact when dropped. For example, various materials such as polystyrene, polyethylene, polypropylene, fluororesin, aluminum, and stainless steel can be used.

Further, as a material of the bottom plate 1006 laid on a floor to absorb the impact given when the container 1004 having the cut partial split-fiber fiber bundle therein in the present invention is dropped from the arbitrary height H, various materials such as Teflon, rubber, urethane foam, expanded polyethylene foam, and rubber sponge can be used.

Another method for giving an impact is a method in which a partial split-fiber fiber bundle is placed on a plate having an arbitrary size, and vibration is applied from a lower side in the horizontal direction of the plate, or a method in which a partial split-fiber fiber bundle is placed on an a plate having an arbitrary size, and an impact is given to the partial split-fiber fiber bundle by hitting with a hammer from the lower side in the horizontal direction of the plate. As the material of the plate used at this time, various materials such as stainless steel, aluminum, copper, and Teflon can be used. At this time, a condition of the impact to be given to the fiber bundle is a condition in terms of acceleration in which acceleration of 80 m/s$^2$ or more is applied for 60 ms or acceleration of 250 m/s$^2$ or less is applied for 60 ms, and more preferably, acceleration of 90 m/s$^2$ or more is applied for 60 ms or acceleration of 120 m/s$^2$ or less is applied for 60 ms. When the acceleration is less than 80 mm/s$^2$, the impact on the partial split-fiber fiber bundle is small, and it is difficult to split the fiber bundle, which is different from the predicted dispersion state in the subsequent processing step. When the acceleration exceeds 250 m/s$^2$, the impact on the partial split-fiber fiber bundle is too large, resulting in excessive split, which is different from the predicted dispersion state in the subsequent processing step.

The critical significance of the number of splitting will be described. First, in order to make physical properties and quality of the SMC stable and good, the number of split filaments in the SMC step needs to be set to $11.1 \times 10^3$ or less. In order to achieve good passage of the fiber bundle in a fiber splitting step, the number of split filaments needs to be $1.5 \times 10^3$ or more.

More preferably, when the number of split filaments is $3 \times 10^3$, the physical properties and the fluff quality are most stable. When the number of split filaments is $11.1 \times 10^3$ or more, which is the lower limit, the number of splitting is small and a splitting width is wide. This creates a gap when the filaments are dispersed on the sheet, and causes an obvious decrease in physical properties. When the number of split filaments is $1.5 \times 10^3$ or less, although there is no problem in terms of the physical properties, a pitch between splitting teeth of the fiber separation processing device becomes narrower. This causes fiber clogging and more fluffing, increases fluff, and degrades the quality. That is, the ease of splitting the actual partial split-fiber fiber bundle is confirmed by the above method for evaluating the number of splitting, and when the number Y of splitting is expressed in

$$\texttt{non-splice part: } (X/11.1 \times 10^3) \leqq Y \leqq (X/1.5 \times 10^3)$$

[Formula 1],

and

$$\texttt{splice part: } (X/25.0 \times 10^3) \leqq Y \leqq (X/2.5 \times 10^3)$$

[Formula 2],

a partial split-fiber fiber bundle showing a good distribution state for SMC processing in the subsequent step can be confirmed in advance, and can effectively prevent abnormal products from being released.

EXAMPLES

The present invention will be described below with reference to Examples and Comparative Examples. The present invention should not be construed as being limited to the examples and comparative examples.

First, the fiber bundles used in Examples and Comparative Examples will be described.

Fiber bundle (1): A continuous carbon fiber bundle having a fiber diameter of 7.2 μm, a tensile elastic modulus of 240 GPa, and the number of filaments of 50,000 is used (manufactured by Zoltek Companies, Inc., product name: "ZOLTEK (registered trademark)" PX35-50K, number of fibers: 50,000).

A method for measuring a characteristic value and a method for evaluating an effect are as follows.

(1) Evaluation of the number of splitting

The evaluation is performed at room temperature. A partial split-fiber fiber bundle was cut to 15 mm in a direction perpendicular to the longitudinal direction. The cut partial split-fiber fiber bundle 1000 is enclosed in a weighing bottle (container 1004) made of fluororesin. The impact on the partial split-fiber fiber bundle 1000 is given by the method of natural fall shown in the schematic view of Fig. 12. In Fig. 12, a vinyl chloride pipe is used for the cylindrical guide 1005, and the rubber bottom plate 1006 is laid on a bottom surface of the cylindrical pipe. The container 1004 having the cut partial split-fiber fiber bundle therein is set on the upper part of the cylindrical pipe, and naturally dropped from the height H of 1 m. The container 1004 collides with the bottom plate 1006 and stops. At that time, acceleration of 100 m/s$^2$ is applied to the cut partial split-fiber fiber bundle 1000 for 60 msec. This impact condition is described as "acceleration of 100 m/s$^2 \times$ 60 ms".

After that, the partial split-fiber fiber bundle 1000 is taken out from the container 1004, and the number of pieces of the separated fiber bundle is counted. For the evaluation, measurement is performed 10 times and the average value is calculated. The average value is rounded off to the second decimal place, and the value up to the first decimal place will be the average number of splitting.

(2) Evaluation of a state of gap with dispersion on the processing sheet

The partial split-fiber fiber bundle is put into the SMC step of Fig. 10, and after the (2) cutting step, the dispersion state of the cut partial split-fiber fiber bundles on the sheet was visually observed. When the partial split-fiber fiber bundles spread over the sheet are viewed from the top, it is determined that a gap is "present" in a case where the underlying sheet is visible from a gap between the partial split-fiber fiber bundles, and it is determined that a gap is "absent" in a case where the underlying sheet is completely invisible from a gap between the partial split-fiber fiber bundles.

<Example 1>

A partial split-fiber fiber bundle was produced using a configuration shown in Fig. 1(a). This is an apparatus that detects a splice part in a traveling fiber bundle and changes an operation mode for thrusting and extracting the rotating fiber splitting means 220 facing the splice part. The fiber bundle (100) including the splice part was unwound at a constant speed of 20 m/min using a winder, and the fiber bundle (100) was passed through a vibrating width extension roll that vibrates the unwound fiber bundle (100) in an axial direction at 10 Hz. After being widened, the fiber bundle (100) was passed through a width regulation roll regulated to a width of 45 mm to obtain a widened reinforcing fiber having an extended width of 45 mm. The splice part was 100 mm in the longitudinal direction and 15 mm in the width direction, which was narrower than 45 mm. A fiber separation processing device in which the rotating fiber splitting means (220) provided with a protruding shape having a thickness of 0.3 mm, a width of 3 mm, and a height of 20 mm were arranged in parallel with the width direction of the fiber bundle (100) at equal intervals of 3 mm was prepared on the widened fiber bundle of the fiber bundle (100) including the obtained splice part. With this fiber separation processing device, the rotating fiber splitting means 220 was rotated at a speed of 114 rpm and was intermittently thrust into the widened fiber bundle including the splice part to produce a partial split-fiber fiber bundle. The rotation speed was not identical to the moving speed of the fiber bundle.

At this time, the rotating fiber splitting means 220 was thrust into the widened fiber bundle traveling at a constant speed of 20 m/min for 3 seconds to create a split-fiber processed part (156 mm), and the fiber separation processing was extracted from the rotating fiber splitting means 220 without being thrust for 0.5 sec (10 mm) to create a split-fiber unprocessed part. By rotating the rotating fiber splitting means 220, the operations of thrusting and extracting were repeated. However, when the splice part approached the rotating fiber splitting means (220), the operation mode was changed to rotate the rotating fiber splitting means (220) at a speed of 20 m/min which was substantially identical to the traveling speed along the longitudinal direction of the fiber bundle.

In the obtained partial split-fiber fiber bundle, the fiber bundle was separated into 15 splits in the width direction in the split-fiber processed part, and had an entanglement accumulation part (120) configured by accumulation of parts in which the filaments were entangled in at least one end of at least one split-fiber processed part. A partial split-fiber fiber bundle of 500 m was produced. When the splice part present in the partial split-fiber fiber bundle was subjected to the fiber separation processing, the length in the longitudinal direction of the splice was 100 mm while the length in the longitudinal direction between the protruding parts provided on the rotating fiber splitting means was 19 mm. Thus, the splice part slightly contacted the rotating fiber splitting means (220). Although the contact distance was 25 mm, the fiber separation processing was performed stably without breaking the splice part. Table 1 shows the results.

Further, the obtained partial split-fiber fiber bundle was cut into 15 mm in a direction perpendicular to the longitudinal direction. An impact having the condition of "acceleration of 100 m/s$^2$ × 60 ms" was applied to the cut partial split-fiber fiber bundle (in accordance with (1) evaluation of the number of splitting). The average number of splitting was 15.2. It was also confirmed that the fiber bundles were dispersed without any gap when dispersed on the processing sheet. Table 1 shows the results.

<Example 2>

An apparatus that detects the splice part of the partial split-fiber fiber bundle and changes the operation mode for thrusting and extracting the protruding part facing the splice part was prepared under conditions similar to those for Example 1.

The partial split-fiber fiber bundle was produced under conditions similar to those for Example 1 except that when the splice part approached the fiber separation processing device, the operation mode was changed to rotate the fiber separation processing device so as to move the protruding part at a speed of 95% of the fiber bundle (19 m/min) in the direction along the traveling direction of the fiber bundle. In the obtained partial split-fiber fiber bundle, the fiber bundle was separated into 15 splits in the width direction in the split-fiber processed part, and had the entanglement accumulation part (120) configured by accumulation of parts in which the filaments were entangled in at least one end of at least one split-fiber processed part. When the partial split-fiber fiber bundle of 500 m was produced, the splice part slightly contacted the rotating fiber splitting means (220), but the fiber separation processing was performed stably without breaking the splice part. Further, the obtained partial split-fiber fiber bundle was cut into 15 mm in a direction perpendicular to the longitudinal direction. An impact having the condition of "acceleration of 100 m/s$^2$ $\times$ 60 ms" was applied to the cut partial split-fiber fiber bundle. At that time, the average number of splitting was 15.3. It was also confirmed that the fiber bundles were dispersed without any gap when dispersed on the processing sheet. Table 1 shows the results.

<Example 3>

A separated fiber bundle was produced by the fiber splitting means 200 shown in Figs. 3(a) and 3(b) in which an iron blade moves vertically. The fiber bundle (100) including the splice part was unwound at a constant speed of 20 m/min using a winder, and the unwound fiber bundle (1) was passed through reinforcing fibers through a vibrating width extension roll that vibrated in the axial direction at 10 Hz. After being widened, the reinforcing fibers were passed through a width regulation roll regulated to a width of 45 mm to obtain a widened fiber bundle having an extended width of 45 mm. A fiber splitting means (200) in which fiber splitting means (200) (made of a steel plate) provided with a protruding shape having a thickness of 0.3 mm, a width of 3 mm, and a height of 20 mm were arranged in parallel with the width direction of the fiber bundle (100) including the splice part at equal intervals of 3 mm was prepared on the fiber bundle (100) including the obtained splice part.

As shown in Fig. 3(b), this fiber separation processing device intermittently performed a series of movements of thrusting the fiber splitting means (200) from below the fiber bundle into the fiber bundle (100) including the splice part in a direction perpendicular to the traveling direction of the fiber bundle (100) including the splice part and then vertically extracting to produce the partial split-fiber fiber bundle.

At this time, the fiber separation processing device was thrust into the widened fiber bundle traveling at a constant speed of 20 m/min for 3 seconds to create a split-fiber processed part having a length of 1,000 mm, and extracted to create a split-fiber unprocessed part of 167 mm for 0.5 seconds. The re-thrusting operation was repeated. However, when the splice part approached the fiber splitting means (200), the fiber splitting means (200) temporarily stopped thrusting into the fiber bundle (100) including the splice part by changing the operation mode. Thus, the timing at which the fiber splitting means (200) was thrust into the fiber bundle (100) including the splice part was changed. As for the timing to start the stop and the timing to stop, a distance (m) from a position where the splice part was detected to the fiber splitting means was divided by the moving speed (m/min) of the fiber bundle to determine the time to start the stop. Further, the narrowed length (m) was obtained from the detected image of the splice part, and the stop time was obtained from the moving speed of the fiber bundle.

In the obtained partial split-fiber fiber bundle, the fiber bundle was separated into 15 splits in the width direction in the split-fiber processed part, and had the entanglement accumulation part (120) configured by accumulation of parts in which the filaments were entangled in at least one end of at least one split-fiber processed part. The partial split-fiber fiber bundle of 500 m was produced. When the splice part present in the partial split-fiber fiber bundle was subjected to the fiber separation processing, the splice part did not contact the metal plate or did not break, and thus the fiber separation processing was performed stably. Further, the obtained partial split-fiber fiber bundle was cut into 15 mm in a direction perpendicular to the longitudinal direction. An impact having the condition of "acceleration of 100 m/s$^2$ $\times$ 60 ms" was applied to the cut partial split-fiber fiber bundle. At that time, the average number of splitting was 15.1. It was also confirmed that the fiber bundles were dispersed without any gap when dispersed on the processing sheet. Table 1 shows the results.

<Example 4>

A partial split-fiber fiber bundle having a configuration shown in Fig. 1 (a) was produced. The fiber separation processing was performed as in Example 1 except that a fiber separation processing device was prepared in which rotating fiber splitting means (220) provided with a protruding shape having a thickness of 0.3 mm, a width of 3 mm, and a height of 20 mm were arranged in parallel with the width direction of the fiber bundle (100) at equal intervals of 11.1 mm. When the splice part approached the rotating fiber splitting means (220), the operation mode was changed to rotate the rotating fiber splitting means (220) at a speed substantially identical to the traveling speed along the longitudinal direction of the fiber bundle.

In the obtained partial split-fiber fiber bundle, the fiber bundle was separated into splits within a range of 4.5 to 6.0 in the width direction in the split-fiber processed part, and had the entanglement accumulation part (120) configured by accumulation of parts in which the filaments were entangled in at least one end of at least one split-fiber processed part. The partial split-fiber fiber bundle of 500 m was produced. When the splice part present in the partial split-fiber fiber bundle was subjected to the fiber separation processing, the splice part slightly contacted the rotating fiber splitting means (220), but the fiber separation processing was performed stably without breaking the splice part. Further, the obtained partial split-fiber fiber bundle was cut into 15 mm in a direction perpendicular to the longitudinal direction. When an impact having the condition of "acceleration of 100 m/s$^2$ × 60 ms" was applied to the cut partial split-fiber fiber bundle, it was confirmed that the non-splice part was separated into splits within a range of 4.5 to 6.0. It was also confirmed that there was some gap when the fiber bundles were dispersed on the processing sheet, but this was not problematic. Table 1 shows the results.

<Example 5>

A partial split-fiber fiber bundle having a configuration shown in Fig. 1 (a) was produced. The fiber separation processing was performed as in Example 1 except that a fiber separation processing device was prepared in which rotating fiber splitting means (220) provided with a protruding shape having a thickness of 0.3 mm, a width of 3 mm, and a height of 20 mm were arranged in parallel with the width direction of the fiber bundle (100) at equal intervals of 1.5 mm. When the splice part approached the rotating fiber splitting means (220), the operation mode was changed to rotate the rotating fiber splitting means (220) at a speed substantially identical to the traveling speed along the longitudinal direction of the fiber bundle.

In the obtained partial split-fiber fiber bundle, the fiber bundle was separated into splits within a range of 30.0 to 33.0 in the width direction in the split-fiber processed part, and had the entanglement accumulation part (120) configured by accumulation of parts in which the filaments were entangled in at least one end of at least one split-fiber processed part. The partial split-fiber fiber bundle of 500 m was produced. When the splice part present in the partial split-fiber fiber bundle was subjected to the fiber separation processing, the splice part slightly contacted the rotating fiber splitting means (220), but the fiber separation processing was performed stably without breaking the splice part. Further, the obtained partial split-fiber fiber bundle was cut into 15 mm in a direction perpendicular to the longitudinal direction. When an impact having the condition of acceleration "100 m/s$^2$ × 60 ms" was applied to the cut partial split-fiber fiber bundle, it was confirmed that the non-splice part was separated into splits within a range of 30.0 to 33.0. In addition, it was confirmed that when the fiber bundles were dispersed on the processing sheet, there was a bulky state where the resin was not easily impregnated although there was no gap. Table 1 shows the results.

<Example 6>

An apparatus that detects the splice part of the partial split-fiber fiber bundle and changes the operation mode for thrusting and extracting the protruding part facing the splice part (see Fig. 4) was prepared under conditions similar to those for Example 4.

The partial split-fiber fiber bundle was produced under conditions similar to those for Example 1 except that when the splice part approached the fiber separation processing device, the operation mode was changed to rotate the fiber separation processing device so as to move the protruding part at a speed of 95% of a yarn speed in the direction along the traveling direction of the fiber bundle. In the obtained partial split-fiber fiber bundle, the fiber bundle was separated into splits within a range of 4.5 to 6.0 in the width direction in the split-fiber processed part, and had the entanglement accumulation part (120) configured by accumulation of parts in which the filaments were entangled in at least one end of at least one split-fiber processed part. When the partial split-fiber fiber bundle of 500 m was produced, the splice part slightly contacted the rotating fiber splitting means (220), but the fiber separation processing was performed stably without breaking the splice part. Further, the obtained partial split-fiber fiber bundle was cut into 15 mm in a direction perpendicular to the longitudinal direction. When an impact having the condition of "acceleration of 100 m/s$^2$ × 60 ms" was applied to the cut partial split-fiber fiber bundle, it was confirmed that the non-splice part was separated into splits within a range of 4.5 to 6.0. It was also confirmed that there was some gap when the fiber bundles were dispersed on the processing sheet, but this was not problematic. Table 1 shows the results.

<Example 7>

An apparatus that detects the splice part of the partial split-fiber fiber bundle and changes the operation mode for thrusting and extracting the protruding part facing the splice part was prepared under conditions similar to those for Example 5. As shown in Fig. 4, an apparatus was prepared in which the narrow width part having the splice part of the partial split-fiber fiber bundle was detected before the fiber splitting step, a rotation speed change signal was sent to the motor of the protruding part based on the information on the narrow width part of the detected splice part to make the rotation speed of the fiber splitting means substantially identical to a conveying speed of the fiber bundle, and the operation mode was changed such that an area in which the fiber splitting means is thrust into the splice part is minimized under conditions similar to those for Example 1.

The partial split-fiber fiber bundle was produced under conditions similar to those for Example 1 except that when the splice part approached the fiber separation processing device, the operation mode was changed to rotate the fiber separation processing device so as to move the protruding part at a speed of 95% of a yarn speed in the direction along the traveling direction of the fiber bundle. In the obtained partial split-fiber fiber bundle, the fiber bundle was separated into splits within a range of 30.0 to 33.0 in the width direction in the split-fiber processed part, and had the entanglement accumulation part (120) configured by accumulation of parts in which the filaments were entangled in at least one end of at least one split-fiber processed part. When the partial split-fiber fiber bundle of 500 m was produced, the splice part slightly contacted the rotating fiber splitting means (220), but the fiber separation processing was performed stably without breaking the splice part. Further, the obtained partial split-fiber fiber bundle was cut into 15 mm in a direction perpendicular to the longitudinal direction. When an impact having the condition of "acceleration of 100 m/s$^2 \times$ 60 ms" was applied to the cut partial split-fiber fiber bundle, it was confirmed that the non-splice part was separated into splits within a range of 30.0 to 33.0. It was also confirmed that when being dispersed on the processing sheet, the fiber bundles were dispersed in a state where there were many overlapping parts of the fibers although there was no gap Table 1 shows the results.

<Example 8>

A partial split-fiber fiber bundle by the method shown in Figs. 3(a) and 3(b) was produced. The fiber separation processing was performed as in Example 3 except that a fiber splitting means (200) was prepared in which fiber splitting means (200) (made of a metal plate) provided with a protruding shape having a thickness of 0.3 mm, a width of 3 mm, and a height of 20 mm were arranged in parallel with the width direction of the fiber bundle (100) including the splice part at equal intervals of 11.1 mm.

As shown in Fig. 3(b), this fiber separation processing device intermittently performed a series of movements of thrusting the fiber splitting means (200) from below the fiber bundle into the fiber bundle (100) including the splice part in a direction perpendicular to the traveling direction of the fiber bundle (100) including the splice part and then vertically extracting to produce the partial split-fiber fiber bundle.

When the splice part approached the fiber splitting means (200), the fiber splitting means (200) temporarily stopped thrusting into the fiber bundle (100) including the splice part by changing the operation mode. Thus, the timing at which the fiber splitting means (200) was thrust into the fiber bundle (100) including the splice part was changed.

In the obtained partial split-fiber fiber bundle, the fiber bundle was separated into splits within a range of 4.5 to 6.0 in the width direction in the split-fiber processed part, and had the entanglement accumulation part (120) configured by accumulation of parts in which the filaments were entangled in at least one end of at least one split-fiber processed part. The partial split-fiber fiber bundle of 500 m was produced. When the splice part present in the partial split-fiber fiber bundle was subjected to the fiber separation processing, the splice part did not contact the metal plate or did not break, and thus the fiber separation processing was performed stably. Further, the obtained partial split-fiber fiber bundle was cut into 15 mm in a direction perpendicular to the longitudinal direction. When an impact having the condition of "acceleration of 100 m/s$^2 \times$ 60 ms" was applied to the cut partial split-fiber fiber bundle, it was confirmed that the non-splice part was separated into splits within a range of 4.5 to 6.0. It was also confirmed that there was some gap when the fiber bundles were dispersed on the processing sheet. Table 1 shows the results.

<Example 9>

A partial split-fiber fiber bundle by the method shown in Figs. 3(a) and 3(b) was produced. The fiber separation processing was performed as in Example 3 except that a fiber splitting means (200) was prepared in which fiber splitting means (200) (made of a metal plate) provided with a protruding shape having a thickness of 0.3 mm, a width of 3 mm, and a height of 20 mm were arranged in parallel with the width direction of the fiber bundle (100) including the splice part at equal intervals of 1.5 mm.

As shown in Fig. 3(b), this fiber separation processing device intermittently performed a series of movements of thrusting the fiber splitting means (200) from below the fiber bundle into the fiber bundle (100) including the splice part in a direction perpendicular to the traveling direction of the fiber bundle (100) including the splice part and then vertically extracting to produce the partial split-fiber fiber bundle. When the splice part approached the fiber splitting means (200), the fiber splitting means (200) temporarily stopped thrusting into the fiber bundle (100) including the splice part by changing the operation mode. Thus, the timing at which the fiber splitting means (200) was thrust into the fiber bundle (100) including the splice part was changed.

In the obtained partial split-fiber fiber bundle, the fiber bundle was separated into splits within a range of 30.0 to 33.0 in the width direction in the split-fiber processed part, and had the entanglement accumulation part (120) configured by accumulation of parts in which the filaments were entangled in at least one end of at least one split-fiber processed part. The partial split-fiber fiber bundle of 500 m was produced. When the splice part present in the partial split-fiber fiber bundle was subjected to the fiber separation processing, the splice part did not contact the metal plate or did not break, and thus the fiber separation processing was performed stably. Further, the obtained partial split-fiber fiber bundle was cut into 15 mm in a direction perpendicular to the longitudinal direction. When an impact having the condition of "acceleration of 100

m/s$^2$ × 60 ms" was applied to the cut partial split-fiber fiber bundle, it was confirmed that the non-splice part was separated into splits within a range of 30.0 to 33.0. It was also confirmed that when being dispersed on the processing sheet, the fiber bundles were dispersed in a state where there were many overlapping parts of the fibers although there was no gap Table 1 shows the results.

<Comparative Example 1>

The partial split-fiber fiber bundle was produced under conditions similar to those for Example 1 except that the yarn width detection unit 900 was not provided and that a function of changing the operation mode when the splice part approached the fiber splitting means was not provided.

In the obtained partial split-fiber fiber bundle, the fiber bundle was separated into 15 splits in the width direction in the split-fiber processed part, and had an entanglement accumulation part (120) configured by accumulation of parts in which the filaments were entangled in at least one end of at least one split-fiber processed part. The partial split-fiber fiber bundle of 500 m was produced. When the splice part present in the partial split-fiber fiber bundle was subjected to the fiber separation processing, the splice part slightly contacted the rotating fiber splitting means (220), and a part of the splice part was broken, and the broken part was clogged and accumulated between the rotating fiber splitting means (220) arranged in parallel to cut the yarn. Table 1 shows the results.

<Comparative Example 2>

A partial split-fiber fiber bundle was produced under conditions similar to those for Example 3, except that an imaging device that detected any twist of the fiber bundle when the splice part approached the fiber separation processing device is provided, and that an apparatus that controlled the fiber splitting means such that the pressing force to the fiber bundle was reduced from immediately before the twist of the fiber bundle contacted the protruding part until the twist passed the protruding part was prepared and operated. Specifically, it is preferable that a twist is detected by the imaging device, and the pressing force applied when the fiber bundle touches the protruding part of the fiber splitting means is reduced from immediately before the protruding part contacts the detected twist until the protruding part passes through the twist. When the twist is detected, the pressing force is preferably reduced to a range of 0.01 to 0.8 times the upper limit value of the pressing force. A pressing force below this range substantially cannot be detected and is difficult to control. Thus, it will be necessary to improve the detection accuracy of a controller itself. On the other hand, when the pressing force exceeds this range, the fiber separation processing for the twists needs to be performed more frequently, and the fiber bundle becomes thinner.

In the obtained partial split-fiber fiber bundle, the fiber bundle was separated into 15 splits in the width direction in the split-fiber processed part, and had the entanglement accumulation part (120) configured by accumulation of parts in which the filaments were entangled in at least one end of at least one split-fiber processed part. When a partial split-fiber fiber bundle of 500 m was produced, the splice part present in the partial split-fiber fiber bundle was detected in the imaging device that normally detected the twisted narrow width part of the fiber bundle, and the pressing force was reduced. However, the speed was not substantially the same as that of the fiber bundle. Thus, when the splice part was subjected to the fiber separation processing, the splice part slightly contacted the rotating fiber splitting means (220), and a part of the splice part was broken, and the broken part was clogged and accumulated between the rotating fiber splitting means (220) arranged in parallel to cut the yarn. Table 1 shows the results.

<Comparative Example 3>

The partial split-fiber fiber bundle was produced under conditions similar to those for Examples 4, 5, 6, and 7 except that the yarn width detection unit 900 was not provided and that the function of changing the operation mode when the splice part approached the fiber splitting means was not provided.

In the obtained partial split-fiber fiber bundle, under conditions similar to those for Examples 4 and 6, the fiber bundle was separated into 4.5 splits in the width direction in the split-fiber processed part, and had the entanglement accumulation part (120) configured by accumulation of parts in which the filaments were entangled in at least one end of at least one split-fiber processed part. The partial split-fiber fiber bundle of 500 m was produced. When the splice part present in the partial split-fiber fiber bundle was subjected to the fiber separation processing, the splice part slightly contacted the rotating fiber splitting means (220), and a part of the splice part was broken, and the broken part was clogged and accumulated between the rotating fiber splitting means (220) arranged in parallel to cut the yarn. Table 1 shows the results.

In the obtained partial split-fiber fiber bundle, under conditions similar to those for Examples 5 and 7, the fiber bundle was separated into splits within a range of 30.0 to 33.0 in the width direction in the split-fiber processed part, and had the entanglement accumulation part (120) configured by accumulation of parts in which the filaments were entangled in at least one end of at least one split-fiber processed part. The partial split-fiber fiber bundle of 500 m was produced. When the splice part present in the partial split-fiber fiber bundle was subjected to the fiber separation processing, the splice part slightly contacted the rotating fiber splitting means (220), and a part of the splice part was broken, and the broken part was clogged and accumulated between the rotating fiber splitting means (220) arranged in parallel to cut the yarn. Table 1 shows the results.

<Comparative Example 4>

A partial split-fiber fiber bundle was produced under conditions similar to those for Examples 3, 8, and 9 except that an imaging device that detected any twist of the fiber bundle when the splice part approached the fiber separation processing device is provided, and that an apparatus that controlled the fiber splitting means such that the pressing force to the fiber bundle was reduced from immediately before the twist of the fiber bundle contacted the protruding part until the twist passed the protruding part was prepared and operated.

In the obtained partial split-fiber fiber bundle, under conditions similar to those for Example 3, the fiber bundle was separated into 15 splits in the width direction in the split-fiber processed part, and had the entanglement accumulation part (120) configured by accumulation of parts in which the filaments were entangled in at least one end of at least one split-fiber processed part. When a partial split-fiber fiber bundle of 500 m was produced, the splice part present in the partial split-fiber fiber bundle was detected in the imaging device that normally detected the twisted narrow width part of the fiber bundle, and the pressing force was reduced. However, the fiber separation processing was not stopped because the part was not determined as a splice part. Thus, when the splice part was subjected to the fiber separation processing, the splice part slightly contacted the rotating fiber splitting means (220), and a part of the splice part was broken, and the broken part was clogged and accumulated between the rotating fiber splitting means (220) arranged in parallel to cut the yarn. Table 1 shows the results.

In the obtained partial split-fiber fiber bundle, under conditions similar to those for Example 8, the fiber bundle was separated into splits within a range of 4.5 to 6.0 in the width direction in the split-fiber processed part, and had the entanglement accumulation part (120) configured by accumulation of parts in which the filaments were entangled in at least one end of at least one split-fiber processed part. When a partial split-fiber fiber bundle of 500 m was produced, the splice part present in the partial split-fiber fiber bundle was detected in the imaging device that normally detected the twisted narrow width part of the fiber bundle, and the pressing force was reduced. However, when the splice part was subjected to the fiber separation processing, the splice part slightly contacted the rotating fiber splitting means (220), and a part of the splice part was broken, and the broken part was clogged and accumulated between the rotating fiber splitting means (220) arranged in parallel to cut the yarn. Table 1 shows the results.

In the obtained partial split-fiber fiber bundle, under conditions similar to those for Example 9, the fiber bundle was separated into splits within a range of 4.5 to 6.0 in the width direction in the split-fiber processed part, and had the entanglement accumulation part (120) configured by accumulation of parts in which the filaments were entangled in at least one end of at least one split-fiber processed part. When a partial split-fiber fiber bundle of 500 m was produced, the splice part present in the partial split-fiber fiber bundle was detected in the imaging device that normally detected the twisted narrow width part of the fiber bundle, and the pressing force was reduced. However, when the splice part was subjected to the fiber separation processing, the splice part slightly contacted the rotating fiber splitting means (220), and a part of the splice part was broken, and the broken part was clogged and accumulated between the rotating fiber splitting means (220) arranged in parallel to cut the yarn. Table 1 shows the results.

[Table 1-1]

| Fiber bundle | | Example 1 | Example 2 | Example 3 | Example 4 | Example 5 | Example 6 | Example 7 | Example 8 | Example 9 |
|---|---|---|---|---|---|---|---|---|---|---|
| | | Fiber bundle (1) | Fiber bundle (1) | Fiber bundle (1) | Fiber bundle (1) | Fiber bundle (1) | Fiber bundle (1) | Fiber bundle (1) | Fiber bundle (1) | Fiber bundle (1) |
| Widened regulation width | mm | 45 | 45 | 45 | 45 | 45 | 45 | 45 | 45 | 45 |
| Fiber separation processing interval | mm | 3 | 3 | 3 | 11.1 | 1.5 | 11.1 | 1.5 | 11.1 | 1.5 |
| Time during which fiber separation processing device is thrust | Sec | 3 | 3 | 3 | 3 | 3 | 3 | 3 | 3 | 3 |
| Time during which fiber separation device is extracted | Sec | 0.5 | 0.5 | 0.5 | 0.5 | 0.5 | 0.5 | 0.5 | 0.5 | 0.5 |
| Number of splitting in separation processing section | Split | 15 | 15 | 15 | 4.5 | 33 | 4.5 | 33 | 4.5 | 33 |
| Presence or absence of yarn width detection imaging device | Present/Absent | Present | Present | Present | Present | Present | Present | Present | Present | Present |
| Length of splice part in longitudinal direction | mm | 100 | 100 | 100 | 100 | 100 | 100 | 100 | 100 | 100 |
| Distance where fiber separation device contacts splice part | mm | 25 | 22 | 0 | 25 | 25 | 22 | 22 | 0 | 0 |
| Step trouble | - | Absent | Absent | Absent | Absent | Absent (Large yarn overlap) | Absent | Absent (Large yarn overlap) | Absent | Absent |
| Gap with dispersion on processing sheet | | Absent | Absent | Absent | Present | Absent (Large yarn overlap) | Present | Absent (Large yarn overlap) | Present | Absent (Large yarn overlap) |

[Table 1-2]

| | | Comparative Example 1 | Comparative Example 2 | Comparative Example 3 | Comparative Example 4 |
|---|---|---|---|---|---|
| Fiber bundle | | Fiber bundle (1) | Fiber bundle (1) | Fiber bundle (1) | Fiber bundle (1) |
| Widened regulation width | mm | 45 | 45 | 45 | 45 |
| Fiber separation processing interval | mm | - | - | 3 | 3 |
| Time during which fiber separation processing device is thrust | Sec | 3 | 3 | 3 | 3 |
| Time during which fiber separation device is extracted | Sec | 0.5 | 0.5 | 0.5 | 0.5 |
| Number of splitting in separation processing section | Split | - | - | 15 | 15 |
| Presence or absence of yarn width detection imaging device | Present/ Absent | Absent | Present | Absent | Present |
| Length of splice part in longitudinal direction | mm | 100 | 100 | 100 | 100 |
| Distance where fiber separation device contacts splice part | mm | Contacts all splice parts | Contacts all splice parts | Contacts all splice parts | Contacts all splice parts |
| Step trouble | - | Present | Present | Present | Present |
| Gap with dispersion on processing sheet | - | - | - | - | - |

In the mechanism shown in Fig. 1, when the splice part (180) approaches the protruding part (210) as the fiber separation processing device, the operation mode is changed to rotate the protruding part (210) at a speed substantially identical to the traveling speed along the longitudinal direction of the fiber bundle (100). At this time, the protruding part (210) may contact the splice part (180). The "distance where the fiber splitting means contacts the splice part" shown in Table 1 means a distance in a longitudinal direction of the contact part (211) at the time of this contact.

INDUSTRIAL APPLICABILITY

The present invention is applicable to any fiber bundle in which a fiber bundle including a plurality of filaments are desirably separated into two or more thin bundles. In particular, when reinforcing fibers are used, the obtained partial split-fiber fiber bundle can be used for any fiber reinforced composite material such as an intermediate base material of discontinuous fibers impregnated with a matrix resin.

DESCRIPTION OF REFERENCE SIGNS

100: Fiber bundle
110: Split-fiber processed part
120: Entanglement accumulation part
130: split-fiber unprocessed part
140: Fluff pool
150: Split-fiber processed part
160: Entangled part
170: Split-fiber processed distance
180: Splice part
200: Fiber splitting means
210: Protruding part

211: Contact part
220: Rotating fiber splitting means
230L, 230R: Corner part
240: Rotation axis
900: Yarn width detection unit
910: Detection camera
920: Image processing apparatus
930: Speed change signal output
1501: Creel
1502: Carbon fiber
1503: Cutting step
1504: Dispersion mechanism
1505: Film
1506: Resin compound
1507: First sheet
1508: Second sheet
1509: Coating step
1510: Conveyor
1511: Resin impregnation step
1512: Intermediate base material
1000: Cut partial split-fiber fiber bundle
1004: Container
1005: Cylindrical guide
1006: Bottom plate

**Claims**

1. A method for producing a partial split-fiber fiber bundle, comprising:

   allowing a fiber bundle having a splice part (180) to travel along a longitudinal direction;
   meanwhile, repeatedly thrusting and extracting a protruding part (210) of a fiber splitting means (220) into and from the fiber bundle in a split-fiber processed part; and thus
   separating a part of the fiber bundle in the longitudinal direction of the fiber bundle,
   wherein the fiber splitting means (220) includes a rotation axis (240) orthogonal to the longitudinal direction of the fiber bundle, and a plurality of the protruding parts (210) are provided on a part of an outer surface of the rotation axis (240),
   wherein the protruding part (210) of the fiber splitting means (220) is extracted from the fiber bundle before the splice part (180) based on position information of the splice part (180) obtained by detecting the splice part (180), and when the splice part (180) passes through the split-fiber processed part, a condition B is satisfied, wherein the condition B is that a moving speed of the protruding part (210) of the fiber splitting means (220) is substantially identical to a traveling speed of the fiber bundle.

2. The method for producing a partial split-fiber fiber bundle according to claim 1, wherein when the splice part (180) passes through the split-fiber processed part, the fiber splitting means (220) moves at a speed substantially identical to a moving speed of the fiber bundle, and thus timing at which the protruding part (210) of the fiber splitting means (220) is thrust into the fiber bundle is changed.

3. The method for producing a partial split-fiber fiber bundle according to claim 1 or 2, wherein after the protruding part (210) of the fiber splitting means (220) is extracted from the fiber bundle and the splice part (180) passes through, while the protruding part (210) of the fiber splitting means (220) is thrust into the fiber bundle again, the fiber splitting means (220) moves at a speed substantially identical to the traveling speed of the fiber bundle, and thus the timing at which the fiber splitting means is thrust into the fiber bundle is changed.

4. The method for producing a partial split-fiber fiber bundle according to any one of claims 1 to 3, wherein an imaging device that detects the splice part (180) is provided upstream in the longitudinal direction of the fiber bundle from the fiber splitting means (220) thrust into the fiber bundle, and the splice part (180) is detected based on a rate of change in a width of the fiber bundle.

5. The method for producing a partial split-fiber fiber bundle according to any one of claims 1 to 4, wherein the fiber bundle is reinforcing fibers.

6. The method for producing a partial split-fiber fiber bundle according to claim 5, wherein the reinforcing fibers are carbon fibers.

7. A partial split-fiber fiber bundle produced according to the method of any one of claims 1 to 4, and being configured by alternately forming a split-fiber processed part that is separated into a plurality of bundles along a longitudinal direction of fiber bundles including a plurality of filaments, and a split-fiber unprocessed part, wherein a splice part (180) formed by joining the fiber bundles is present in the split-fiber unprocessed part.

**Patentansprüche**

1. Verfahren zur Herstellung eines teilweise-gespaltenen Faserbündels, umfassend:

Zulassen, dass sich ein Faserbündel mit einem Spleißteil (180) entlang einer Längsrichtung bewegt; währenddessen wiederholtes Einführen und Herausziehen eines vorstehenden Teils (210) einer Faserspalteinrichtung (220) in das und aus dem Faserbündel in einem verarbeiteten Spaltfaser-Teil; und somit Trennen eines Teils des Faserbündels in der Längsrichtung des Faserbündels, wobei die Faserspalteinrichtung (220) eine Drehachse (240) orthogonal zu der Längsrichtung des Faserbündels aufweist, und eine Vielzahl der vorstehenden Teile (210) an einem Teil einer Außenoberfläche der Drehachse (240) vorgesehen sind, wobei der vorstehende Teil (210) der Faserspalteinrichtung (220) auf Grundlage von Positionsinformationen des Spleißteils (180), die durch Erfassen des Spleißteils (180) erhalten werden, vor dem Spleißteil (180) aus dem Faserbündel herausgezogen wird, und wenn der Spleißteil (180) durch den verarbeiteten Spaltfaser-Teil hindurchtritt, eine Bedingung B erfüllt ist, wobei die Bedingung B bedeutet, dass eine Bewegungsgeschwindigkeit des vorstehenden Teils (210) der Faserspalteinrichtung (220) im Wesentlichen identisch mit einer Fortbewegungsgeschwindigkeit des Faserbündels ist.

2. Verfahren zur Herstellung eines teilweise-gespaltenen Faserbündels nach Anspruch 1, wobei, wenn der Spleißteil (180) durch den verarbeiteten Spaltfaser-Teil hindurchtritt, die Faserspalteinrichtung (220) sich mit einer Geschwindigkeit bewegt, die im Wesentlichen mit einer Bewegungsgeschwindigkeit des Faserbündels identisch ist, und somit ein Zeitpunkt verändert wird, an dem der vorstehende Teil (210) der Faserspalteinrichtung (220) in das Faserbündel eingeführt wird.

3. Verfahren zur Herstellung eines teilweise-gespaltenen Faserbündels nach Anspruch 1 oder 2, wobei nachdem der vorstehende Teil (210) der Faserspalteinrichtung (220) aus dem Faserbündel herausgezogen wurde und der Spleißteil (180) hindurchtritt, während der vorstehende Teil (210) der Faserspalteinrichtung (220) wieder in das Faserbündel eingeführt wird, sich die Faserspalteinrichtung (220) mit einer Geschwindigkeit bewegt, die im Wesentlichen identisch mit der Fortbewegungsgeschwindigkeit des Faserbündels ist, und somit der Zeitpunkt, an dem die Faserspalteinrichtung in das Faserbündel eingeführt wird, verändert wird.

4. Verfahren zur Herstellung eines teilweise-gespaltenen Faserbündels nach einem der Ansprüche 1 bis 3, wobei eine Abbildungsvorrichtung, die den Spleißteil (180) erfasst, in der Längsrichtung des Faserbündels vorgelagert der in das Faserbündel eingeführten Faserspalteinrichtung (220) vorgesehen ist, und der Spleißteil (180) auf Grundlage einer Änderungsrate einer Breite des Faserbündels erfasst wird.

5. Verfahren zur Herstellung eines teilweise-gespaltenen Faserbündels nach einem der Ansprüche 1 bis 4, wobei das Faserbündel Verstärkungsfasern sind.

6. Verfahren zur Herstellung eines teilweise-gespaltenen Faserbündels nach Anspruch 5, wobei die Verstärkungsfasern Kohlenstofffasern sind.

7. Teilweise-gespaltenes Faserbündel, das gemäß dem Verfahren nach einem der Ansprüche 1 bis 4 hergestellt wird, und das durch abwechselndes Bilden eines verarbeiteten Spaltfaser-Teils, der entlang einer Längsrichtung von Faserbündeln mit einer Vielzahl von Strängen in eine Vielzahl von Bündeln getrennt ist, sowie eines nicht-ver-

# EP 3 748 055 B1

arbeiteten Spaltfaser-Teils konfiguriert ist, wobei ein Spleißteil (180), der durch Verbinden der Faserbündel gebildet wird, in dem nicht-verarbeiteten Spaltfaser-Teil vorhanden ist.

**Revendications**

1.  Procédé de production d'un faisceau de fibres à fibres partiellement divisées, comprenant :

    la permission à un faisceau de fibres présentant une partie d'épissure (180) de se déplacer le long d'une direction longitudinale ;
    pendant ce temps, la poussée et l'extraction de manière répétée d'une partie saillante (210) d'un moyen de division de fibres (220) dans et depuis le faisceau de fibres dans une partie traitée à fibres divisées ; et ainsi la séparation d'une partie du faisceau de fibres dans la direction longitudinale du faisceau de fibres,
    dans lequel le moyen de division de fibres (220) comprend un axe de rotation (240) orthogonal à la direction longitudinale du faisceau de fibres, et une pluralité de parties saillantes (210) sont fournies sur une partie d'une surface extérieure de l'axe de rotation (240),
    dans lequel la partie saillante (210) du moyen de division de fibres (220) est extraite du faisceau de fibres avant la partie d'épissure (180) sur la base d'informations de position de la partie d'épissure (180) obtenues par la détection de la partie d'épissure (180), et lorsque la partie d'épissure (180) passe à travers la partie traitée à fibres divisées, une condition B est satisfaite, dans laquelle
    la condition B est qu'une vitesse de déplacement de la partie saillante (210) du moyen de division de fibres (220) est sensiblement identique à une vitesse de déplacement du faisceau de fibres.

2.  Procédé de production d'un faisceau de fibres à fibres partiellement divisées selon la revendication 1, dans lequel lorsque la partie d'épissure (180) passe à travers la partie traitée à fibres divisées, le moyen de division de fibres (220) se déplace à une vitesse sensiblement identique à une vitesse de déplacement du faisceau de fibres, et ainsi le moment auquel la partie saillante (210) du moyen de division de fibres (220) est poussée dans le faisceau de fibres est modifié.

3.  Procédé de production d'un faisceau de fibres à fibres partiellement divisées selon la revendication 1 ou 2, dans lequel après que la partie saillante (210) du moyen de division de fibres (220) est extraite du faisceau de fibres et que la partie d'épissure (180) passe à travers, pendant que la partie saillante (210) du moyen de division de fibres (220) est à nouveau poussée dans le faisceau de fibres, le moyen de division de fibres (220) se déplace à une vitesse sensiblement identique à la vitesse de déplacement du faisceau de fibres, et ainsi le moment auquel le moyen de division de fibres est poussé dans le faisceau de fibres est modifié.

4.  Procédé de production d'un faisceau de fibres à fibres partiellement divisées selon l'une quelconque des revendications 1 à 3, dans lequel un dispositif d'imagerie qui détecte la partie d'épissure (180) est fourni en amont dans la direction longitudinale du faisceau de fibres à partir du moyen de division de fibres (220) poussé dans le faisceau de fibres, et la partie d'épissure (180) est détectée sur la base d'un taux de changement de la largeur du faisceau de fibres.

5.  Procédé de production d'un faisceau de fibres à fibres partiellement divisées selon l'une quelconque des revendications 1 à 4, dans lequel le faisceau de fibres représente des fibres de renforcement.

6.  Procédé de production d'un faisceau de fibres à fibres partiellement divisées selon la revendication 5, dans lequel les fibres de renforcement sont des fibres de carbone.

7.  Faisceau de fibres à fibres partiellement divisées produit selon le procédé de l'une quelconque des revendications 1 à 4, et étant configuré en formant en alternance une partie traitée à fibres divisées qui est séparée en une pluralité de faisceaux le long d'une direction longitudinale de faisceaux de fibres comprenant une pluralité de filaments, et une partie non traitée à fibres divisées, dans lequel une partie d'épissure (180) formée en joignant les faisceaux de fibres est présente dans la partie non traitée à fibres divisées.

[FIG. 1]

[FIG.2]

(a) 100 180 211 210 240 FIBER BUNDLE TRAVELING DIRECTION B 220

(b) 100 211 211 FIBER BUNDLE TRAVELING DIRECTION B 220

(c) 100 211 180 FIBER BUNDLE TRAVELING DIRECTION B 220

【 FIG. 3】

FIBER BUNDLE TRAVELING DIRECTION A

110 130 110 130 110

(a)

180 140 120 170

100

FIBER BUNDLE TRAVELING DIRECTION A

180 211 140 120

(b)

210

200

EP 3 748 055 B1

【FIG. 4】

(a)

910  920  930
900
100  210
180  240  FIBER BUNDLE
220  TRAVELING DIRECTION B

(b)

FIBER BUNDLE
TRAVELING DIRECTION B

(c)

FIBER BUNDLE
TRAVELING DIRECTION B

EP 3 748 055 B1

【 FIG. 5】

EP 3 748 055 B1

【 FIG. 6 】

(a)

100

150

130    110

FIBER BUNDLE TRAVELING DIRECTION A

160   A   200   140   120   170

(b)

211   140   FIBER BUNDLE TRAVELING DIRECTION A

210

200

EP 3 748 055 B1

**[ FIG. 7 ]**

FIBER BUNDLE TRAVELING DIRECTION A

230R

230L

【FIG. 8】

(a)

(b)

【FIG. 9】

(a)

100    120    210

240

220

FIBER BUNDLE
TRAVELING DIRECTION B

(b)

100    120

220

FIBER BUNDLE
TRAVELING DIRECTION B

(c)

100    120

220

FIBER BUNDLE
TRAVELING DIRECTION B

EP 3 748 055 B1

36

【FIG. 10】

EP 3 748 055 B1

【FIG. 11】

【FIG. 12】

（a）

1004

1000

1005

H

1006

（b）

1005

H

1004

1000

1006

EP 3 748 055 B1

**EP 3 748 055 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3239372 A
- WO 2017221657 A
- JP 2002255448 A
- JP 2004100132 A
- JP 2013049208 A
- JP 2014030913 A
- JP 5512908 B
- WO 2012105080 A
- JP 2011241494 A
- EP 2687356 A
- WO 2016136812 A
- WO 2017006989 A
- WO 2016104154 A
- US 6385828 B